# FASCICULE DE BREVET EUROPEEN

(11) **EP 2 918 327 B1**
(45) Date de publication et mention de la délivrance du brevet: **27.06.2018**
(21) Numéro de dépôt: 15158576.7
(22) Date de dépôt: 11.03.2015
(51) Int. Cl.: B01D 53/00, C10K 1/10, B01D 53/10, B01D 53/14, B01D 53/30, B01D 53/52, B01D 53/75, B01D 53/68, C10K 1/00, C10K 1/04, B01D 53/60, C10L 3/10

(54) **PROCÉDÉ D' ÉPURATION D' EFFLUENTS GAZEUX PAR ÉLIMINATION SÉLECTIVE DES POLLUANTS QU' ILS CONTIENNENT**
VERFAHREN ZUR REINIGUNG VON ABGASEN DURCH SELEKTIVE ELIMINATION DER DARIN ENTHALTENEN SCHADSTOFFE
METHOD FOR PURIFYING GASEOUS EFFLUENTS BY SELECTIVE REMOVAL OF THE POLLUTANTS CONTAINED THEREIN

(30) Priorité: 11.03.2014 FR 1452024
(43) Date de publication de la demande: 16.09.2015
(73) Titulaire: Ben Brahim, Abdelkader, 94320 Thials (FR)
(72) Inventeur: Ben Brahim, Abdelkader, 94320 Thials (FR)
(74) Mandataire: Cabinet Chaillot

(56) Documents cités:
- WO-A1-2009/132424
- WO-A1-2011/136423
- WO-A2-2011/099850
- DE-A1- 3 712 209
- FR-A- 891 976
- US-A1- 2004 244 588
- US-A1- 2013 074 693
- US-A1- 2013 334 466

## Description

La présente invention concerne le domaine de l'épuration d'effluents gazeux, et porte, en particulier, sur un procédé d'épuration d'effluents gazeux contaminés.

Les effluents gazeux contaminés se caractérisent par la diversité et la complexité de la nature des polluants et par leurs concentrations variables et fluctuantes d'un effluent gazeux à un autre, voire même au sein d'un même effluent.

Les modes usuels/classiques de dépollution des effluents rencontrent des difficultés majeures et même infranchissables pour le traitement de ces effluents et ce, du fait qu'un seul mode ou une seule technique de traitement se révèle incapable de traiter à la fois l'intégralité des polluants présents dans l'effluent gazeux.

Parmi les polluants dont le traitement s'avère extrêmement difficile surtout par un seul mode ou une seule technique, on peut citer particulièrement : les goudrons, l'hydrogène sulfuré (H₂S), les composés organiques non volatils non méthaniques (COVNM), en particulier les silanes et siloxanes présents dans ces derniers.

La présente invention a pour but de proposer un procédé d'épuration des effluents gazeux pollués par au moins un polluant choisi parmi les goudrons, les COVNM, les composés halogénés, l'hydrogène sulfuré (H₂S), les sulfures organiques incluant les mercaptans, l'ammoniac (NH₃), le dioxyde de soufre (SO₂), les oxydes d'azote (NOₓ) et le dioxyde de carbone (CO₂), l'élimination du CO₂ pouvant être plus ou moins poussée suivant la qualité recherchée pour l'effluent gazeux.

Les effluents gazeux à traiter sont notamment le gaz de synthèse, le biogaz, le gaz naturel, les gaz associés à l'extraction du pétrole et les rejets gazeux industriels.

Les goudrons sont des composés bien spécifiques d'hydrocarbures condensables, incluant principalement les hydrocarbures aromatiques polycycliques (HAP) et les phénols. Les goudrons représentent un risque non seulement sanitaire mais aussi une vraie gêne et une contrainte assez sérieuse pour le bon fonctionnement des équipements et installations de gazéification. Ils se condensent facilement sur les points froids et induisent des problèmes d'usure et de corrosion des installations et une moins bonne efficacité des échanges thermiques. De plus, les goudrons peuvent former du coke par cokage ou des suies par polymérisation. Tous ces dépôts sont à l'origine non seulement du colmatage des canalisations ou des installations mais encore de la désactivation des catalyseurs.

Les COVNM sont constitués par des composés organiques volatils (COV) carboxylés et carbonylés tels que les acides organiques volatils, les alcools, aldéhydes, cétones ainsi que par des silanes et des siloxanes.

Les composés halogénés sont des polluants pouvant exister dans la composition de l'effluent gazeux et pouvant renfermer les éléments chimiques : fluor, chlore, brome, iode.

Les sulfures organiques sont notamment CSH, CS₂, COS et les mercaptans, à savoir les composés RSH, R étant un radical hydrocarboné, les mercaptans étant généralement à l'état solide.

Les principales techniques classiques de désulfuration (élimination de H₂S) des effluents gazeux sont notamment le traitement biologique, l'absorption chimique, l'adsorption sur charbon actif, le procédé de perméation membranaire, les procédés modulés en pression « PSA », la cryogénie et l'incinération (ou oxydation thermique) :
- le traitement biologique par des bactéries avec toutes ses variantes présente les inconvénients majeurs d'occupation d'une surface très importante, d'un coût élevé en investissements et d'une gestion très complexe du fait des exigences et de la fragilité des bactéries ;
- l'absorption ou lavage chimique, qu'il soit acide ou basique, présente les inconvénients majeurs de phénomène de déplacement de pollution et de gestion complexe de traitement des boues issues du lavage ;
- l'adsorption sur charbon actif présente les inconvénients majeurs d'être très limitée vis-à-vis de la concentration et des types de polluants qui peuvent être traités ; la gestion du charbon saturé en polluants est également assez complexe ; et
- le procédé de perméation membranaire, les procédés PSA, la cryogénie et l'incinération sont des procédés énergivores, coûteux, limités dans leur champ d'action et très difficiles à mettre en oeuvre.

Les oxydes d'azote (NOₓ) sont des formes oxydées de l'azote. NO, NO₂, N₂O, N₂O₄ et N₂O₃ sont généralement désignés ici par le terme générique « NOₓ ».

L'ammoniac gazeux (NH₃) peut se trouver parmi les composants des effluents gazeux issus de l'épuration des eaux usées ou rejets industriels.

Le CO₂ doit, dans certains cas, être éliminé au moins partiellement, par exemple dans le traitement du biogaz.

Le gaz de synthèse ou syngas est un mélange gazeux combustible produit par thermochimie. Il contient principalement de la vapeur d'eau, de l'hydrogène, du méthane, du monoxyde de carbone et un peu de dioxyde de carbone ainsi que des résidus de thermolyse dont la composition et la quantité varient selon son mode de production et selon la source de carbone (bois ou charbon par exemple) qui a été utilisée pour le produire. Presque tous ces résidus sont des composés toxiques, cancérigènes ou mutagènes. Le gaz de synthèse doit notamment être épuré pour éliminer les goudrons qu'il renferme. Il peut également renfermer des COVNM, des composés halogénés, de l'hydrogène sulfuré, des sulfures organiques. Il peut aussi renfermer de l'humidité et doit donc devoir être séché.

Le biogaz est le gaz produit par la fermentation, également appelée méthanisation, de matières organiques animales ou végétales en l'absence d'oxygène. Cette fermentation se produit naturellement dans les marais par exemple ou spontanément dans les décharges contenant des déchets organiques ou encore est provoquée artificiellement dans des digesteurs par exemple pour traiter des boues d'épuration, des déchets organiques industriels ou agricoles.

Le biogaz est un mélange composé essentiellement de méthane (typiquement de 40 à 70% en volume) et de dioxyde de carbone avec des quantités variables de vapeur d'eau et d'hydrogène sulfuré (H₂S) ainsi que des composés COVNM. Il peut également renfermer des sulfures organiques et du NH₃. Renfermant donc de l'humidité, il doit aussi pouvoir être séché.

Dans le cas du biogaz produit essentiellement par les stations d'épuration des eaux usées et les décharges, la problématique principale est l'émanation d'odeurs, et principalement du H₂S qui génère des nuisances olfactives, dégrade également les équipements et les ouvrages et présente des risques sanitaires pour le personnel et les populations voisines.

Pour une valorisation en biométhane du biogaz, il faut également éliminer le CO₂ et l'humidité pour atteindre une qualité similaire à celle du gaz naturel (aux environs de 98% en volume de méthane). Les techniques d'épuration sont multiples mais la production de biométhane n'en est qu'à ses débuts en Europe, laquelle compte quelques centaines d'installations seulement.

Le gaz naturel est un combustible fossile composé d'un mélange d'hydrocarbures présent naturellement dans des roches poreuses sous forme gazeuse. La forme la plus exploitée du gaz naturel est le gaz conventionnel non associé à l'extraction de pétrole, lequel gaz comprend outre le méthane et un taux variable d'hydrocarbures plus lourds, du dioxyde de carbone, H₂S, SO₂, des sulfures organiques. Il renferme aussi de l'humidité et doit donc être séché.

Les gaz associés à l'extraction de pétrole sont les gaz présents en solution dans le pétrole. Ils sont séparés lors de l'extraction de ce dernier. Ils sont conventionnellement appelés « APG » ou gaz de torchage. Leur composition est assez proche de celle de biogaz avec des concentrations variables en polluants à éliminer : H₂S, SO₂, sulfures organiques, COVNM, CO₂. Ils renferment également de l'humidité et doivent donc être séchés.

Les rejets gazeux industriels consistent en tous types de polluants atmosphériques issus des activités humaines et générés directement ou indirectement dans l'atmosphère et les espaces clos sous forme de substances ayant des conséquences préjudiciables de nature à mettre en danger la santé humaine, à nuire aux ressources biologiques et aux écosystèmes, à influer sur les changements climatiques, à détériorer les biens matériels, à provoquer des nuisances olfactives excessives. Ils peuvent être de natures diverses : H₂S, SO₂, sulfures organiques, COVNM, NH₃, NOₓ.

Par conséquent, un nouveau mode d'épuration qualifié comme écologique, peu énergivore, non complexe en termes d'installation et de gestion et ayant la faculté de traiter tous types de polluants, peut être considéré comme une révolution dans le domaine de l'épuration des effluents gazeux pollués.

Le présent inventeur propose un procédé modulaire comprenant différents modules de traitement, chacun étant destiné à un traitement spécifique, tel que l'élimination des goudrons, des COVNM, des composés halogénés avec séchage, des NOₓ, l'élimination de H₂S avec le cas échéant CO₂ et NH₃, la valorisation du H₂S éliminé, etc., et en particulier dans le cas du biogaz, l'enrichissement en méthane du biogaz épuré jusqu'à la production de biométhane.

Selon la composition de l'effluent gazeux à épurer, certains de ces modules sont combinés entre eux de manière à proposer la solution la plus performante. Cette modularité permet aussi d'éliminer sélectivement les polluants présents dans le gaz et de leur trouver la solution de recyclage ou de valorisation optimale en termes de coût et d'impact environnemental.

De plus, l'efficacité du procédé ne dépend pas de facteurs difficilement contrôlables tels que la pression, l'humidité, la température, les variations instantanées du volume de l'effluent gazeux à traiter et/ou de la charge en polluants.

Qu'il s'agisse de l'épuration du biogaz en station d'épuration d'eaux usées, de décharges ou des gaz associés brûlés, le procédé de l'invention peut avantageusement utiliser trois différents modèles de solution modulaire de désulfuration spécifique (élimination de H₂S) qui réalisent également l'enrichissement en méthane du biogaz épuré par élimination partielle ou totale du CO₂ jusqu'à produire du biométhane avec des coûts d'installation, de traitement et de besoins énergétiques jamais approchés à ce jour. Plus le gaz est pollué en contaminants, plus l'écart entre les solutions existantes et le procédé de l'invention se creuse.

Par ailleurs, des réactifs de traitement selon l'invention sont avantageusement transformés au cours de ces traitements en nouveaux produits non nocifs et/ou à valeur ajoutée, qui peuvent servir de matières premières de base dans des activités industrielles.

Que ce soit pour le biogaz, le gaz de synthèse, le gaz naturel ou les gaz associés, la qualité de l'effluent gazeux épuré est parfaitement compatible avec la totalité des solutions de valorisation énergétique et permet en conséquence, selon les quantités d'effluent gazeux récupéré et les infrastructures industrielles et/ou de réseau de gaz locales existantes, de le valoriser en :
- électricité : alimentation directe de moteurs ou turbines à gaz à haut rendement (CCGT) ou de piles à combustibles avec du biogaz et du gaz de synthèse ; cette valorisation est la plus simple à mettre en oeuvre et une solution particulièrement intéressante pour des besoins électriques locaux (dans des régions ne disposant pas encore d'accès à l'électricité) ;
- biométhane : peut être utilisé comme carburant ou pour réinjection au réseau de distribution du gaz naturel (après odorisation au THT) ;
- gaz naturel : selon la disponibilité des infrastructures de transport, il sera :
   - injecté directement dans le réseau de distribution du gaz naturel (transport par pipe-line) ;
   - liquéfié (GNL ou GPL) pour un transport par bateau ;
   - transformé en produits commercialisables : carburant GTL (Gas to Liquid), méthanol, oléfines, DME (diméthyléther), ammoniac.

Quelle que soit sa configuration, le procédé de l'invention ne génère aucun rejet nocif dans l'atmosphère, aucune pollution hydrique (fonctionnement en circuit fermé), aucune pollution des sols (valorisation des polluants éliminés en produits non toxiques et à valeur ajoutée ne nécessitant pas d'enfouissement).

Le procédé de l'invention propose une technologie d'épuration d'effluent gazeux innovante, performante, écologique et économique particulièrement bien adaptée au traitement du gaz de synthèse chargés en goudrons et en H₂S. Son fonctionnement et son efficacité de traitement ne sont pas affectés par le volume des effluents gazeux à traiter, la charge des polluants ni leurs variations respectives.

Grâce à son concept modulaire et des techniques de traitement innovantes et exclusives, le procédé de l'invention permet d'éliminer sélectivement les différents polluants contenus dans l'effluent gazeux brut et de leur trouver la solution de valorisation optimale en termes de coûts et d'impact environnemental.

La désulfuration vise principalement l'élimination de H₂S et, dans certains cas de SO₂. Le H₂S éliminé de l'effluent gazeux est avantageusement valorisé directement sur site en deux sous-produits non toxiques et à valeur ajoutée.

Les COVNM (cancérigènes) éliminés sont utilisés comme combustible à fort pouvoir calorifique tandis que les sulfures organiques sont éliminés par filtration à travers un support filtrant.

La présente invention a donc d'abord pour objet un procédé d'épuration d'un effluent gazeux contenant des polluants choisis parmi les goudrons, les composés organiques volatils non méthaniques (COVNM), les composés halogénés, l'hydrogène sulfuré (H₂S), l'ammoniac (NH₃), le dioxyde de soufre (SO₂), les oxydes d'azote (NOₓ) et le dioxyde de carbone (CO₂), caractérisé par le fait que l'on analyse l'effluent gazeux à épurer pour identifier les polluants qu'il contient, puis que l'on conduit les opérations successives suivantes selon les polluants identifiés :
(1) élimination au moins partielle, avantageusement complète, des goudrons par refroidissement de l'effluent gazeux brut pour faire passer les goudrons de leur état gazeux à leur état liquide et séparation physique de ceux-ci pour récupérer un effluent gazeux traité ;
(2) élimination au moins partielle, avantageusement complète, des COVNM par barbotage de l'effluent gazeux dans un mélange liquide de COVNM de la même composition que celle des COVNM présents dans l'effluent gazeux à traiter afin que les COVNM gazeux se condensent et rejoignent ledit mélange liquide, et récupération de l'effluent gazeux traité;
(3) élimination au moins partielle, avantageusement complète, des composés halogénés par barbotage de l'effluent gazeux dans une solution de salification, la salification permettant un séchage simultané de l'effluent gazeux, et récupération de l'effluent gazeux traité ;
(4) élimination au moins partielle d'au moins l'un parmi H₂S, NH₃, SO₂, CO₂ et NOₓ en choisissant parmi:
   (4a) élimination au moins partielle d'au moins l'un parmi H₂S, NH₃, SO₂ et CO₂ par passage de l'effluent gazeux dans de l'eau réfrigérée dans laquelle lesdits H₂S, NH₃, SO₂ et CO₂ qui sont à l'état gazeux sont piégés dans cet état par physisorption, l'eau de procédé qui est saturée en lesdits polluants gazeux étant séparée pour obtenir un effluent gazeux traité; ou
   (4b) élimination au moins partielle de H₂S dans le cas où du CO₂ est co-présent avec lui, par barbotage de l'effluent gazeux dans un liquide permettant l'absorption chimique du H₂S avec élimination simultanée d'au moins une partie du CO₂, ou élimination au moins partielle des NOₓ par barbotage de l'effluent gazeux dans un liquide permettant l'absorption chimique de ceux-ci, et récupération de l'effluent chimique traité; ou
   (4c) élimination dans n'importe quel ordre de :
      - H₂S seul ou avec CO₂ par pulvérisation dans un courant de l'effluent gazeux d'un réactif apte à se combiner avec respectivement H₂S ou H₂S + CO₂ pour donner un produit de réaction solide que l'on élimine de l'effluent gazeux pour récupérer celui-ci à l'état épuré ;
      - SO₂ seul ou CO₂ seul ou SO₂ + CO₂ par humidification de l'effluent gazeux, puis pulvérisation dans l'effluent gazeux humidifié d'un réactif apte à se combiner avec le produit de réaction entre l'eau d'humidification et respectivement SO₂ ou CO₂ ou SO₂ + CO₂ pour donner un produit final de réaction que l'on élimine de l'effluent gazeux pour récupérer celui-ci à l'état épuré ; et
      - NOₓ seuls par réaction de l'effluent gazeux avec H₂O₂ puis pulvérisation dans l'effluent gazeux ainsi traité d'un réactif apte à se combiner avec le produit de réaction entre H₂O₂ et les NOₓ pour donner un produit final de réaction que l'on élimine de l'effluent gazeux pour récupérer celui-ci à l'état épuré.

Le gaz à traiter est avantageusement choisi parmi le gaz naturel, les gaz associés à l'extraction du pétrole, le biogaz, les gaz de synthèse et les rejets gazeux industriels.

En (1), on peut avantageusement faire passer l'effluent gazeux à dégoudronner dans au moins un échangeur de chaleur à faisceau tubulaire vertical, raccordé, à sa base, à un collecteur de goudrons, ledit effluent gazeux passant en dehors des tubules et un fluide de refroidissement passant à l'intérieur des tubules, les goudrons se liquéfiant le long des tubules pour couler gravitairement et être recueillis dans le collecteur.

En particulier, suivant un mode de réalisation particulier, on utilise deux échangeurs de chaleur à faisceau tubulaire (E2, E2'), raccordés, à leur base, à un collecteur de goudrons et un troisième échangeur de chaleur (E1) du même type mais sans collecteur de goudrons et on fait passer l'effluent gazeux par les deux séquences successives suivantes :
- dans la première séquence, on fait passer l'effluent gazeux à une température T1 supérieure à 120°C dans un premier échangeur avec collecteur (E2') sans lui faire subir d'échange thermique, ensuite dans l'échangeur sans collecteur (E1) où il subit un échange thermique pour le refroidir jusqu'à la température T2 de 120°C ± 2°C, puis dans l'autre échangeur avec collecteur (E2) pour le refroidir jusqu'à une température T3, notamment de 25°C, les goudrons étant retenus dans les parois dudit échangeur (E2) à l'extérieur de ses tubules, le gaz dégoudronné sortant dudit échangeur E2 ; et
- dans la deuxième séquence, on fait passer l'effluent gazeux qui continue à arriver à la température T1 non plus dans l'échangeur E2' mais dans l'échangeur E2 sans lui faire subir d'échange thermique, provoquant la fluidification des goudrons retenus dans celui-ci, lesquels s'écoulent alors et peuvent être recueillis dans le collecteur (6) associé, ensuite dans l'échangeur sans collecteur (E1) où il subit un échange thermique pour le refroidir jusqu'à une température T2 de 120°C + 2°C, puis dans l'autre échangeur avec collecteur (E2') pour le refroidir jusqu'à une température T3 de 25°C, les goudrons étant retenus dans les parois dudit échangeur E2' à l'extérieur de ses tubules, le gaz dégoudronné sortant dudit échangeur E2' ; puis que l'on répète le cycle E2'-E1-E2 puis E2-E1-E2' tant qu'il arrive de l'effluent gazeux.

En (2), on peut avantageusement faire passer l'effluent gazeux à traiter dans une colonne à débordement (C1) avec serpentin de refroidissement, contenant ledit mélange liquide, maintenue à une température de -10°C ± 2°C, le barbotage dans ladite colonne C1 permettant d'éliminer les COVNM de l'effluent gazeux à traiter par le phénomène de condensation.

En (3), on peut avantageusement faire barboter l'effluent gazeux à traiter dans une colonne à débordement (CH) remplie d'une solution d'acide, tel que l'acide sulfurique comme solution de salification, le barbotage dans ladite solution permettant d'éliminer les composés halogénés présents dans ledit effluent gazeux en même temps que les traces d'eau s'il en existe.

En (4a), l'eau de procédé séparée, saturée en lesdits polluants gazeux et pouvant également contenir des polluants à l'état solide est avantageusement adressée à un réacteur de séparation, d'une part de l'eau chargée des éventuels polluants solides et, d'autre part, du gaz, l'eau, si elle est chargée de polluants solides, étant alors filtrée pour éliminer ces polluants et avantageusement recyclée à l'étage (4a).

En (4a), en particulier pour l'élimination de H₂S, on peut avantageusement faire passer l'effluent gazeux à traiter dans des colonnes de désulfuration (C2 à C7) remplies d'eau réfrigérée se trouvant à une température comprise entre 2°C et 5°C, constituant un étage de désulfuration, ladite eau, par un phénomène de physisorption absorbant H₂S selon le rapport 1 L d'eau pour 4 L de H₂S, l'eau de procédé chargée en polluants gazeux et éventuellement en sulfures organiques solides étant adressée à un réacteur de séparation eau/gaz, puis l'eau séparée lors de ce dégazage si elle est chargée en sulfures organiques, étant traitée par filtration et réinjectée en tant qu'eau traitée dans l'étage de désulfuration.

Les colonnes de désulfuration sont avantageusement disposées suivant deux séries montées en parallèle, chaque série comportant trois colonnes montées en série, les colonnes des deux séries (C2-C3-C4) étant tour à tour en service de désulfuration et en service de régénération de l'eau de procédé.

Le gaz séparé au niveau du réacteur de séparation liquide/gaz peut avantageusement être adressé dans un réacteur renfermant une solution d'acide, tel que l'acide acétique, pour transformation du H₂S et d'au moins une partie du CO₂ présent dans le gaz, le carbone et la solution d'acide sulfurique obtenus étant envoyés dans des cuves de stockage et l'éventuelle fraction de CO₂ n'ayant pas réagi étant rejetée dans l'atmosphère.

A l'étape de filtration, on fait avantageusement passer le liquide séparé dans un ou plusieurs filtres (F1a, F1b) à substrat tel que charbon actif, les différents filtres étant avantageusement montés en parallèle pour un fonctionnement en alternance dans le cas où l'un deux est saturé, pour capter les polluants à l'état solide, tels que les sulfures organiques, puis dans au moins un filtre F2, F3, F4 en série pour éliminer les impuretés fines restantes, et ensuite dans un osmoseur à eau pour obtenir une eau de qualité avantageusement réinjectée à l'étage de désulfuration.

En (4b), on fait avantageusement barboter l'effluent à purifier dans une série de colonnes à débordement à la température ambiante, les colonnes à débordement (C8, C9 et C10) renfermant une solution d'acide, tel que l'acide acétique, pour transformation du H₂S et du CO₂ présent dans le gaz, le carbone et la solution d'acide sulfurique obtenus étant envoyés dans des cuves de récupération, et l'effluent gazeux au moins partiellement désulfuré étant récupéré à la sortie de la dernière colonne.

En (4b), on fait barboter l'effluent à purifier dans une série de colonnes à débordement à la température ambiante, les colonnes à débordement (C8, C9 et C10) renfermant une solution d'eau oxygénée pour transformation des NOₓ présents dans le gaz, le HNO₃ obtenu étant envoyé dans une cuve de récupération, et l'effluent gazeux au moins partiellement débarrassé des oxydes d'azote étant récupéré à la sortie de la dernière colonne.

En (4c), on procède avantageusement en diffusant l'effluent suivant un courant ascendant dans un réacteur comportant, dans sa partie inférieure, un dispositif, tel qu'une rampe, d'apport d'eau ou de solution de H₂O₂ lorsqu'une humidification ou une réaction avec H₂O₂ est respectivement prévue, dans sa partie supérieure, un dispositif, tel qu'une rampe, de pulvérisation de réactif, et, en partie basse, un dispositif de récupération des produits finals de réaction, les réactifs appliqués étant notamment Cu(OH)₂ dans le cas de l'élimination de H₂S seul ; Ca(OH)₂ dans le cas de l'élimination de H₂S + CO₂ ; de Ca(OH)₂ dans le cas de l'élimination de CO₂ seul par réaction de H₂CO₃ résultant de la réaction CO₂ + H₂O avec Ca(OH)₂ ; de Ca(OH)₂ dans le cas de l'élimination de SO₂ seul ou de SO₂ + CO₂ par humidification suivi par un traitement par Ca(OH)₂ ; de Ca(OH)₂ dans le cas de l'élimination des NOₓ seuls par réaction avec H₂O₂ puis par absorption chimique du HNO₃ sur Ca(OH)₂.

Pour mieux illustrer l'objet de la présente invention, on va en décrire ci-après, à titre indicatif et non limitatif, plusieurs modes de réalisation particuliers avec référence au dessin annexé.

Sur ce dessin :
- la Figure 1 représente schématiquement un module de dégoudronnage d'un effluent gazeux ;
- les Figures 1.1 et 1.2 illustrent les deux séquences initiales fonctionnant de façon alternée du passage de l'effluent gazeux à travers le module de la Figure 1, ces deux séquences se répétant tour à tour par la suite ;
- la Figure 2 représente schématiquement un module de compression de l'effluent gazeux à la sortie du module de la Figure 1 ;
- la Figure 3 représente schématiquement un module d'élimination des COVNM par condensation ;
- la Figure 4 représente schématiquement un module d'élimination des composés halogénés par salification avec séchage ;
- la Figure 5 représente schématiquement un module de désulfuration par physisorption ;
- la Figure 6 représente schématiquement un module de séparation liquide - gaz (Réacteur 1) et de valorisation de H₂S par absorption chimique de H₂S en H₂SO₄ (Réacteur 2) ;
- la Figure 7 représente schématiquement un module de traitement des eaux chargées ;
- la Figure 8 représente schématiquement un module d'épuration par absorption chimique soit du H₂S, soit des NOx ;
- la Figure 9 représente schématiquement un module d'épuration de différents polluants restants après le passage à travers les modules des Figures 3 et/ou 4 ; et
- la Figure 10 représente un organigramme indiquant l'enchaînement des modules qui peuvent être utilisés pour l'épuration de l'effluent gazeux.

Une description plus détaillée va suivre, à titre d'exemple, des différents modules successifs pour la mise en oeuvre du procédé de la présente invention. Comme indiqué, ces modules sont mis en service en fonction de la nature de polluants d'un effluent gazeux à purifier.

On a indiqué dans cette description des valeurs de température qui ont été utilisées pour l'épuration d'un gaz de synthèse.

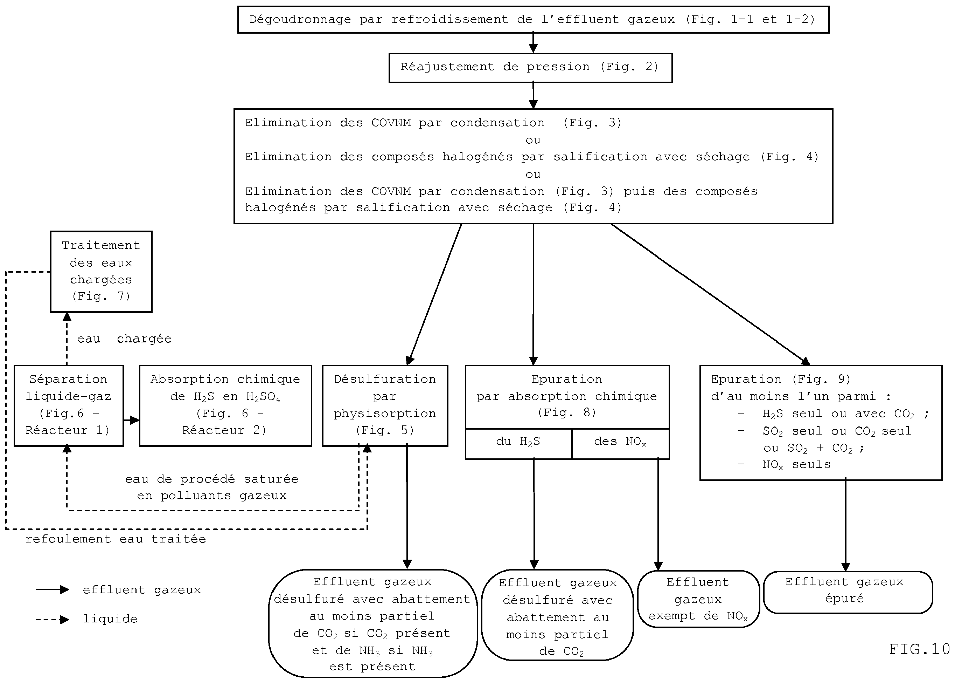

On est parvenu à une élimination complète des goudrons et aux résultats attendus pur l'élimination des autres polluants en mettant en oeuvre les différentes voies représentées schématiquement sur la Figure 10.

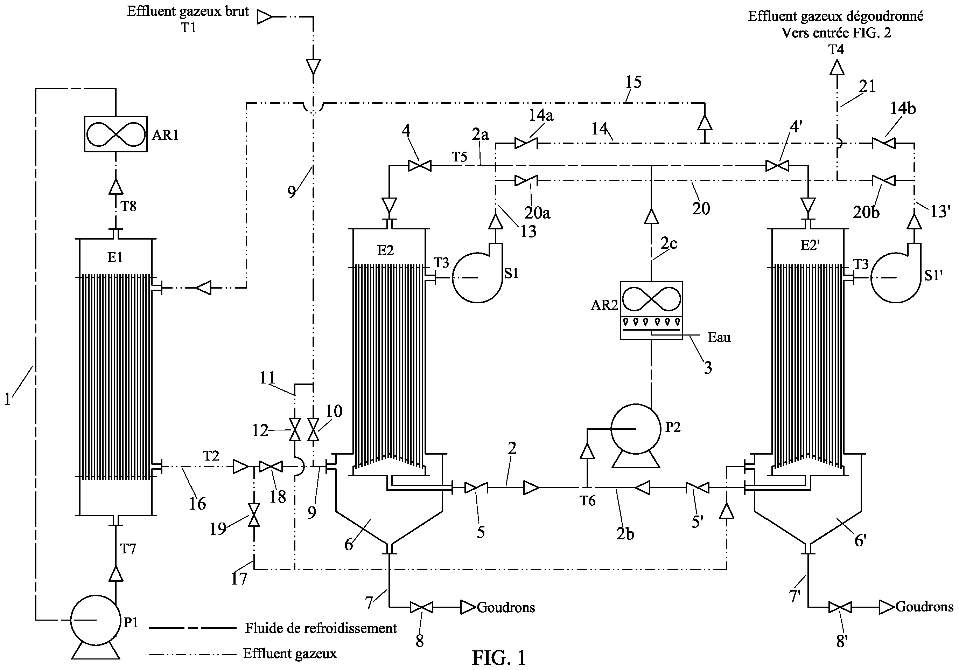

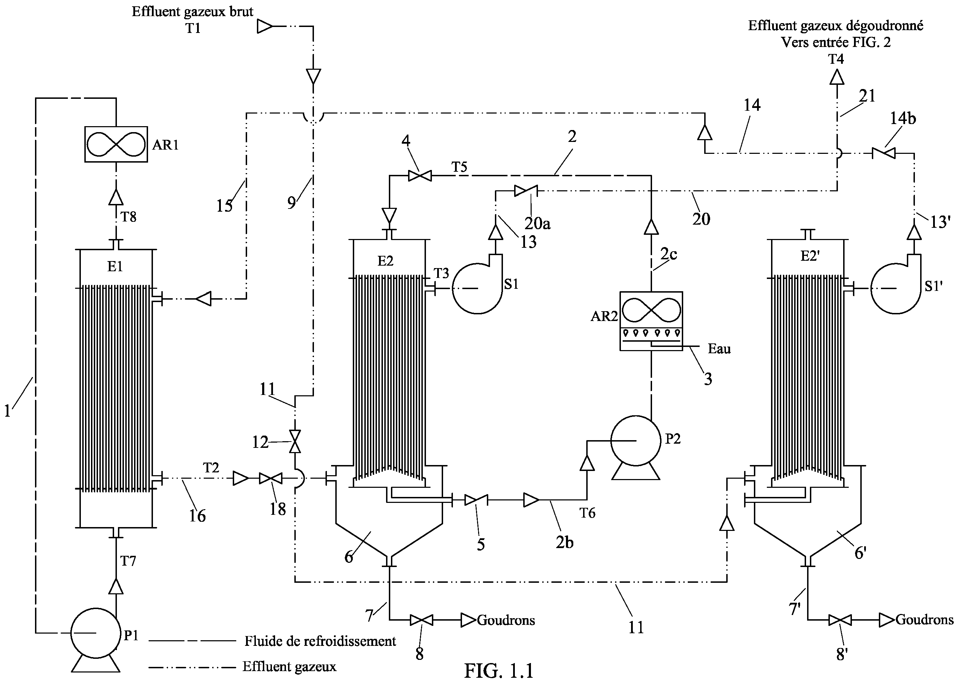

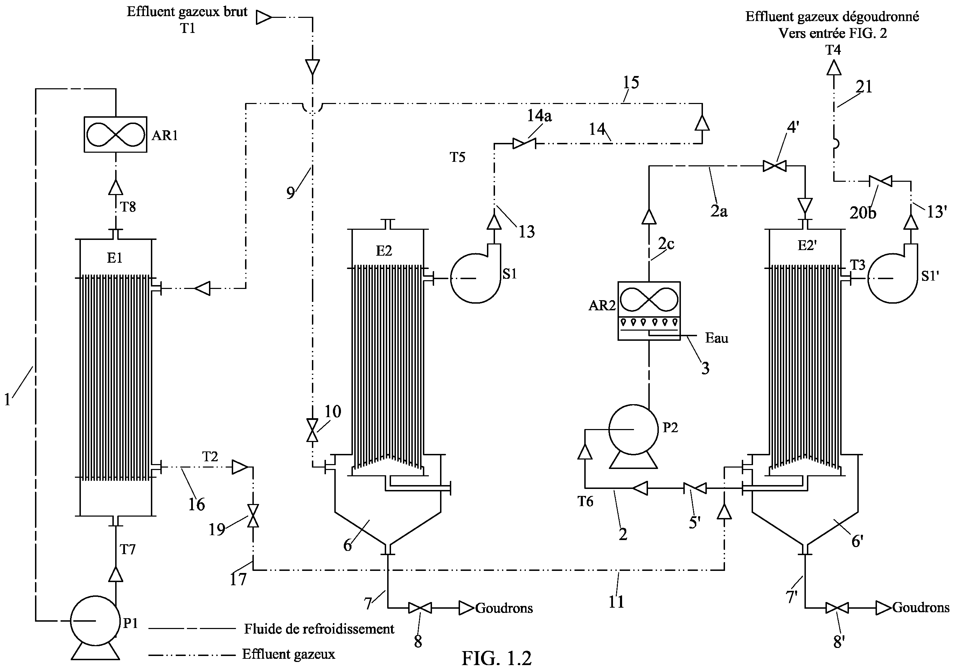

### MODULE DE DEGROUDRONNAGE D'UN EFFLUENT GAZEUX - Figures 1, 1.1 et 1.2

### Appareillage

Ce module comporte trois échangeurs de chaleur à faisceau tubulaire vertical E1, E2 et E2', appelés ci-après « échangeurs tubulaires », deux aéro-réfrigérateurs AR1 et AR2, deux pompes de circulation P1 et P2 et deux soufflantes S1 et S1'.

Dans les échangeurs tubulaires E1, E2 et E2', l'effluent gazeux à traiter circule à l'extérieur des tubes ou tubules, du fluide de refroidissement circulant à l'intérieur de ceux-ci. Les échangeurs tubulaires E2 et E2' sont équipés en partie basse d'un collecteur de goudrons.

Le circuit fermé du fluide de refroidissement de l'échangeur E1 est désigné par le chiffre de référence 1. Le circuit fermé de refroidissement des échangeurs E2 et E2' est un circuit commun désigné par le chiffre de référence 2.

Le fluide de refroidissement contenu dans les tubes ou tubules des échangeurs est avantageusement une solution d'eau et d'éthylène glycol, appelée aussi eau glycolée.

L'aéro-réfrigérateur AR1 est un échangeur de chaleur de type radiateur à plaques dans lequel le fluide de refroidissement qui s'est réchauffé est refroidi par de l'air.

L'aéro-réfrigérateur AR2 est un échangeur de chaleur de type radiateur à plaques dans lequel le fluide de refroidissement qui s'est réchauffé est refroidi par un mélange d'air et d'eau sous pression (mélange de brumisation). Il comporte des plaques parallèles avantageusement ondulées, agencées par groupes de deux, le fluide de refroidissement passant entre les deux plaques de chaque groupe, lesquelles sont bombardées sur leurs faces extérieures par des jets d'eau + air sous pression (eau brumisée). L'utilisation d'eau brumisée permet de réduire la consommation d'eau ainsi que la consommation d'énergie, l'eau étant mise sous pression dans de l'air grâce à un compresseur intégré et l'eau sous pression se refroidissant directement sans nécessiter de réfrigération.

Dans l'échangeur tubulaire E1, l'effluent gazeux à refroidir entre en région supérieure du faisceau tubulaire à l'extérieur des tubules, et, dans le circuit fermé 1, le fluide de refroidissement à une température T7 est amené en partie basse dans les tubules par la pompe de circulation P1 et sort en partie haute à une température T8 pour être refroidi dans l'aéro-réfrigérateur AR1 afin d'être renvoyé à la pompe P1.

Le circuit fermé 2 de refroidissement des échangeurs tubulaires E2 et E2' comporte une branche supérieure 2a pour le fluide de refroidissement froid à température T5, une branche inférieure 2b pour le fluide de refroidissement réchauffé à température T6 et une branche 2c qui réunit les deux branches 2a et 2b et sur le trajet de laquelle se trouvent la pompe de circulation P2 et l'aéro-réfrigérateur avec brumisateur AR2, lequel utilise de l'air refroidi par de l'eau arrivant par la conduite 3.

Les échangeurs tubulaires E2 et E2' sont alimentés à leur sommet par du fluide à température T5 refroidi dans l'aéro-réfrigérateur avec brumisateur AR2, l'entrée du fluide à température T5 étant gouvernée par des vannes respectivement 4 et 4'.

Le fluide réchauffé à température T6 sort en partie inférieure de chacun des échangeurs E2 et E2', pour être adressé à la pompe de circulation P2. Sur chacune de ces sorties, est disposée un clapet anti-retour respectivement 5 et 5'.

Les échangeurs E2 et E2' présentent chacun en partie basse un collecteur de récupération des goudrons respectivement 6 et 6', les goudrons récupérés dans chacun de ces collecteurs sortant par une conduite respectivement 7 et 7' sur laquelle est disposée une vanne respectivement 8 et 8'.

L'effluent gazeux brut à température T1 est amené en partie basse de chaque échangeur E2 et E2', au-dessus du collecteur de récupération de goudrons associé 6, 6', respectivement par la conduite 9 sur laquelle se trouve une vanne 10 et par une dérivation 11 de la conduite 9 qui part d'un point en amont de la vanne 10 et sur le trajet de laquelle se trouve une vanne 12.

L'effluent gazeux dégoudronné sort au sommet de chaque échangeur E2, E2' à température T3 et est envoyé par une conduite respectivement 13, 13' sur le trajet de laquelle se trouve la soufflante respectivement S1 et S1' dans une première branche 14 qui est munie de clapets anti-retour 14a et 14b et qui comporte une dérivation 15 pour envoyer l'effluent gazeux dégoudronné à température T3 vers le sommet de l'échangeur tubulaire E1, effluent gazeux qui ressort en partie basse de l'échangeur E1 à la température T2 par une conduite 16 qui est reliée à la conduite 9 avec interposition d'une vanne 18 et qui comporte une dérivation 17 qui part d'un point en amont de la vanne 18 et sur le trajet de laquelle se trouve une vanne 19, pour être reliée à la conduite 11.

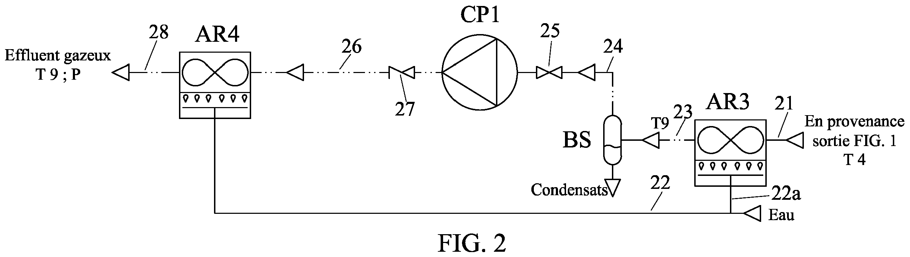

L'effluent gazeux entre donc à la partie basse de chaque échangeur tubulaire E2, E2' et ressort au sommet de l'échangeur tubulaire respectif E2, E2' par la conduite 13, 13', sur le trajet de laquelle se trouve la soufflante respectivement S1 et S1', pour être adressé dans la première branche 14 comme décrit ci-dessus ou dans une seconde branche 20 qui est munie de clapets anti-retour 20a et 20b respectivement et qui comporte une dérivation 21 par laquelle l'effluent gazeux dégoudronné à température T4 va sortir pour être adressé au module qui va être décrit avec référence à la Figure 2.

### Fonctionnement

### Première séquence initiale (Figure 1.1)

On injecte l'effluent gazeux brut, notamment un gaz de synthèse, à la température T1 par les conduites 9 puis 11 dans la partie inférieure de l'échangeur E2' duquel il ressort en partie supérieure, toujours à l'état brut, par la conduite 13' pour être adressé par l'intermédiaire des conduites 14 puis 15 dans l'échangeur E1. Lors du passage dans cet échangeur E2', l'effluent gazeux ne subit pas d'échange thermique.

Dans l'échangeur E1, l'effluent gazeux est ramené à la température T2 et sort donc à la partie inférieure de l'échangeur E1 à la température T2. Le courant d'effluent gazeux brut est ensuite refoulé vers l'échangeur E2 où il subit un échange thermique permettant l'abaissement de la température de l'effluent gazeux à la température T3 et le dépôt des goudrons sur les parois externes des tubules de l'échangeur E2.

Les goudrons sont retenus dans les parois de l'échangeur E2 à l'extérieur des tubules.

En sortie de l'échangeur E2, l'effluent gazeux refroidi, débarrassé de ses goudrons, est à une température T4 supérieure à T3 après son passage à travers la soufflante S1.

Des refroidissements répétitifs de l'effluent gazeux dans l'échangeur E2 génèreraient le colmatage de cet échangeur. Pour cette raison, un refroidissement alterné avec l'échangeur E2' est prévu.

### Deuxième séquence initiale - Figure 1.2

Comme on vient de l'indiquer, pour éviter un colmatage de l'échangeur E2, l'effluent gazeux brut est amené, par la conduite 9, à la température T1, à passer par l'échangeur E2, en arrivant en partie basse, sans échange thermique, provoquant la fluidification - et non l'évaporation - des goudrons déjà retenus sur l'échangeur E2 lors de la séquence précédente. Cette fluidification permet l'écoulement de ces derniers pour être récupérés par le collecteur 6.

L'effluent gazeux brut en partie supérieure de l'échangeur E2 sort toujours à l'état brut par les conduites 13, 14 et 15 vers l'échangeur E1. Dans l'échangeur E1, il subit un échange thermique l'amenant à se refroidir à la température T2. Il est alors renvoyé dans l'échangeur E2' par la conduite 11 pour subir un second refroidissement où les goudrons sont retenus sur les parois de l'échangeur E2' à l'extérieur des tubules, le courant d'effluent gazeux brut subissant dans l'échangeur E2' un échange thermique permettant l'abaissement de sa température à la température T3 et le dépôt des goudrons sur les parois externes des tubules de l'échangeur E2'.

En sortie de l'échangeur E2', l'effluent gazeux refroidi, débarrassé de ses goudrons, est à température T4 après son passage à travers la soufflante S1'.

### Répétition des séquences des Figures 1.1 et 1.2

L'alternance de ces deux séquence se répète indéfiniment tant que l'effluent gazeux à traiter arrive, les goudrons se déposant alors dans le collecteur 6', puis dans le collecteur 6, à nouveau dans le collecteur 6', etc.

On a opéré avec les températures suivantes :

| | |
|---|---|
| T1 | >120°C |
| T2 | 120°C |
| T3 | ∼25°C |
| T4 | ∼40°C |
| T5 | ∼15°C |
| T6 | ∼90°C |
| T7 | ∼85°C |
| T8 | ∼90°C |

### MODULE DE REAJUSTEMENT DE LA PRESSION DE L'EFFLUENT GAZEUX - Figure 2

Ce module - qui est un module de commodité - a pour but de réajuster la pression de l'effluent gazeux sortant du module de la Figure 1 pour atteindre la pression de service de l'opération de traitement. Il n'est pas nécessairement utilisé si l'effluent gazeux à traiter ne contient pas de goudrons.

Une perte de charge s'étant produite dans le module de la Figure 1, il convient donc de rétablir la pression de l'effluent gazeux. C'est le rôle de ce module qui comporte deux aéro-réfrigérateurs avec brumisateur AR3 et AR4 et un compresseur CP1 intercalé entre les deux.

Une conduite 22 apporte de l'eau au brumisateur d'AR4, une dérivation 22a apportant de l'eau au brumisateur d'AR3.

L'effluent gazeux dégoudronné provenant de la sortie de la conduite 21, à une température T4, est refoulé vers le premier aéro-réfrigérateur AR3, d'où il ressort à la température inférieure T9.

En sortie de l'aéro-réfrigérateur AR3, l'effluent gazeux présente des traces d'humidité condensée. L'humidité est alors éliminée par l'intermédiaire d'une purge d'eau au moyen d'un ballon séparateur de condensats BS, lequel est intercalé entre l'aéro-réfrigérateur AR3 et le compresseur CP1.

L'effluent gazeux est alors acheminé vers le compresseur CP1 par une conduite 24 sur laquelle se trouve une vanne 25, puis sort du compresseur CP1 à la température T9 par une conduite 26 sur laquelle se trouve un clapet 27 pour être refoulé vers l'aéro-réfrigérateur avec brumisateur AR4 d'où il ressort par la conduite 28 à la température T9 et à l'état comprimé à la pression relative P de service.

La température de l'effluent gazeux ayant augmenté légèrement du fait de l'augmentation de la pression, on l'a régulée à la baisse en faisant passer l'effluent gazeux à travers le second aéro-réfrigérateur AR4 pour qu'elle retourne à la valeur T9.

On peut prévoir un ou plusieurs autres étages (CP, AR4) si la correction de perte de charge est jugée non satisfaisante.

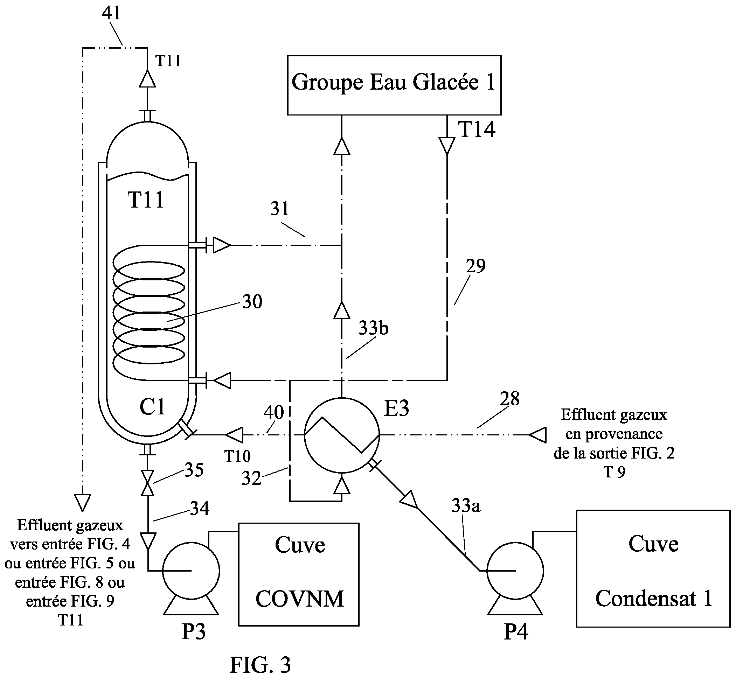

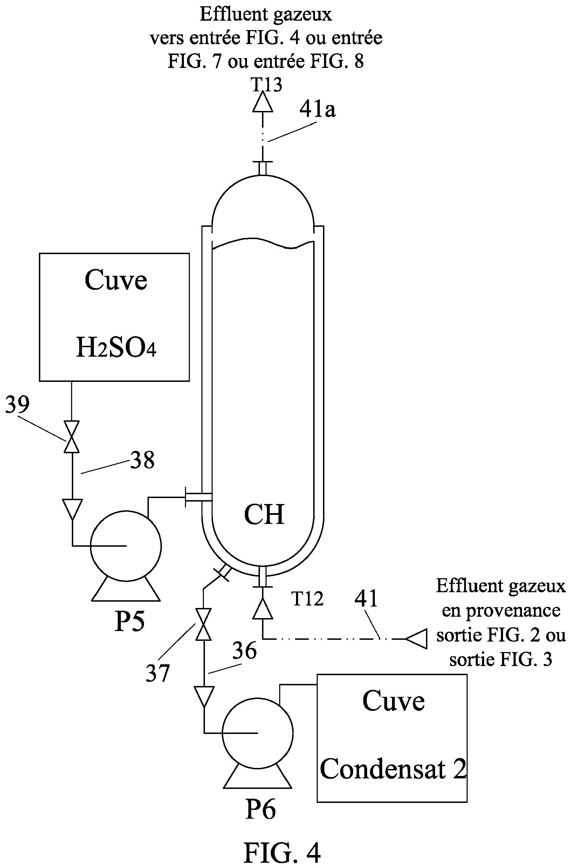

L'effluent gazeux à la sortie du module de la Figure 2 est ensuite dirigé vers le module d'élimination des COVNM de la Figure 3 ou du module d'élimination des composés halogénés avec séchage de la Figure 4.

Dans l'exemple illustré, on a opéré avec une température T9 de 15°C.

### MODULE D'ELIMINATION DES COVNM PAR CONDENSATION - Figure 3

Ce module repose sur le principe de la condensation suivant lequel le barbotage dans des COVNM liquides à -10°C (T11) comprenant les mêmes constituants et proportions en COVNM que l'effluent gazeux à traiter permet de séparer les COVNM par condensation. A -10°C, seuls les COVNM sont à l'état liquide, le reste des composés étant à l'état gazeux.

### Appareillage

L'appareillage comprend une colonne C1, qui est une colonne d'élimination des COVNM, à débordement avec serpentin de refroidissement. Le liquide de remplissage de la colonne C1 est un liquide ayant la même composition ou sensiblement la même composition que la composition en COVNM de l'effluent gazeux à traiter.

Le fond de la colonne C1 est équipé d'un diffuseur dont les pores ont un diamètre d'environ 1 µm, permettant le bullage de l'effluent gazeux dans le liquide de traitement de COVNM à la température T11.

Un « groupe à eau glacée 1 » amène de l'eau glycolée glacée à la température T14 à la partie inférieure de la colonne C1 par la conduite 29, l'eau suivant un trajet en serpentin 30 dans la colonne C1 et ressortant en partie supérieure par la conduite 31 pour être renvoyée au « groupe à eau glacée 1 ».

Une dérivation 32 de la conduite 29 alimente en eau glycolée glacée un échangeur E3 à eau glacée, équipé d'un purgeur à condensat, ledit condensat étant évacué de ce dernier par une conduite 33a sur laquelle se trouve une pompe d'évacuation P4 qui pompe le condensat pour le refouler vers la « cuve de condensat 1 ».

Le fluide réchauffé sortant de l'échangeur E3 est adressé dans la conduite 33b pour retour au « groupe à eau glacée 1 ».

Les COVNM sont soutirés du fond de la colonne à débordement C1 par une conduite 34 en étant pompés par une pompe d'évacuation P3 dans une cuve de COVNM. Une vanne 35 est disposée sur la conduite 34.

L'effluent gazeux en provenance de la sortie 28 du module de la Figure 2 à la température T9 entre dans l'échangeur E3 et en ressort par la conduite 40 à la température T10 pour être transféré au fond de la colonne C1. Il ressort du haut de celle-ci à la température T11, inférieure à T10, par un conduit 41 pour être adressé à une entrée d'au moins l'un des modules des Figures 4, 5, 8 ou 9.

### Fonctionnement

L'effluent gazeux à température T9 en provenance du module de la Figure 2 est refoulé dans l'échangeur E3 pour abaisser sa température à T10.

Comme indiqué, l'échangeur E3 est relié au système de circulation d'eau glacée, alimenté par le « groupe eau glacée 1 » à température T14 ; et le « groupe eau glacée 1 » alimente également la colonne C1.

L'échangeur E3 est également relié à la pompe d'évacuation P4 qui sert à éliminer le condensat produit lors de la régulation de la température vers la cuve de récupération de condensat 1 (« cuve condensat 1 »).

Le gaz refroidi à T10 entre ensuite dans la colonne à C1 au niveau de sa partie inférieure.

On fait ainsi barboter l'effluent gazeux à traiter dans la colonne C1. Un trop-plein permet l'évacuation des COVNM condensés à l'aide de la pompe d'évacuation P3 vers la cuve de récupération des COVNM. La température de la colonne C1 est maintenue à T11 à l'aide de l'eau glacée à T14 qui circule dans le serpentin 30 à l'intérieur de la colonne C1.

Le surplus de COVNM éliminé à cette étape du procédé de l'invention est ensuite brûlé ou adressé à la torche et constitue ainsi une source énergétique

Dans l'exemple illustré, on a opéré avec les températures suivantes

| | |
|---|---|
| T10 | ∼ -2°C |
| T11 | -10°C |
| T14 | -15°C |

### MODULE D'ELIMINATION DES COMPOSES HALOGENES PAR SALIFICATION AVEC SECHAGE - Figure 4

L'appareillage comprend une colonne à débordement CH de salification et séchage. Dans l'exemple représenté, la colonne CH est remplie d'une solution de H₂SO₄ (liquide de salification et séchage).

Du condensat est soutiré du fond de la colonne CH par une conduite 36 en étant pompé par une pompe d'évacuation P6 dans une « cuve condensat 2 ». Une vanne 37 est disposée sur la conduite 36.

Afin de maintenir une concentration stable en H₂SO₄, une pompe doseuse P5 sert à alimenter le liquide de séchage à travers la conduite 38 en H₂SO₄ concentré stocké dans la « cuve H₂SO₂ ». Une vanne 39 est disposée sur la conduite 38.

A la sortie de C1, l'effluent gazeux de la conduite 41 en provenance du module de la Figure 2 ou du module de la Figure 3 est refoulé dans la colonne CH remplie de la solution de H₂SO₄ qui est conçue pour éliminer les composés halogénés et les traces d'humidité. Le trop-plein permet l'évacuation des condensats et de l'excédent de la solution de H₂SO₄ vers la « cuve condensat 2 » à l'aide de la pompe P6. La concentration de H₂SO₄ dans le liquide de la colonne CH est régulée à l'aide de la pompe doseuse P5, tout en étant généralement maintenue à plus de 50% de H₂SO₄.

Cette étape de traitement avec H₂SO₄ permet d'éliminer les traces d'eau présentes dans l'effluent gazeux à la température T12, ainsi que les composés halogénés. T12 est légèrement supérieure à T11 car l'effluent gazeux s'est légèrement réchauffé.

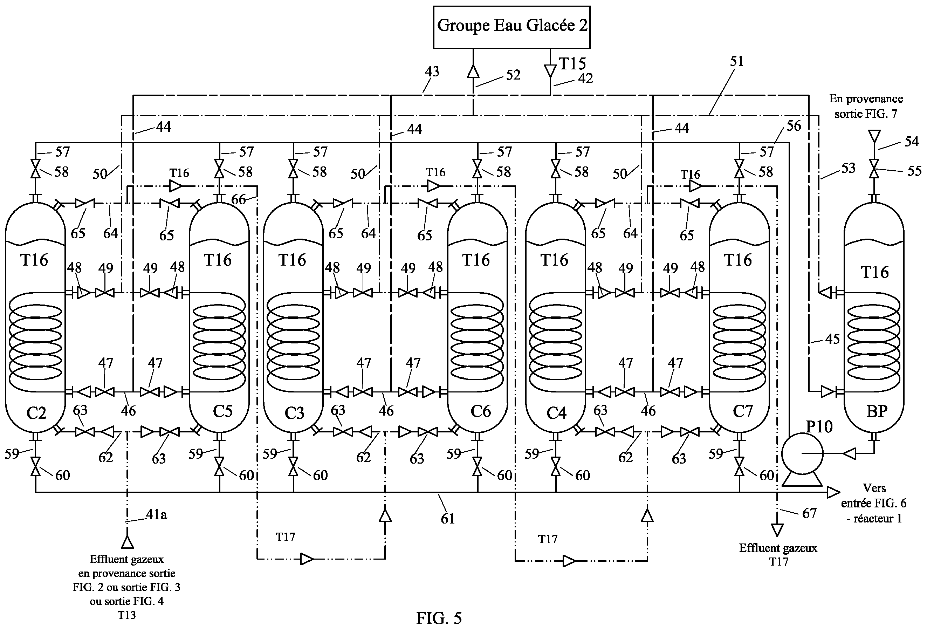

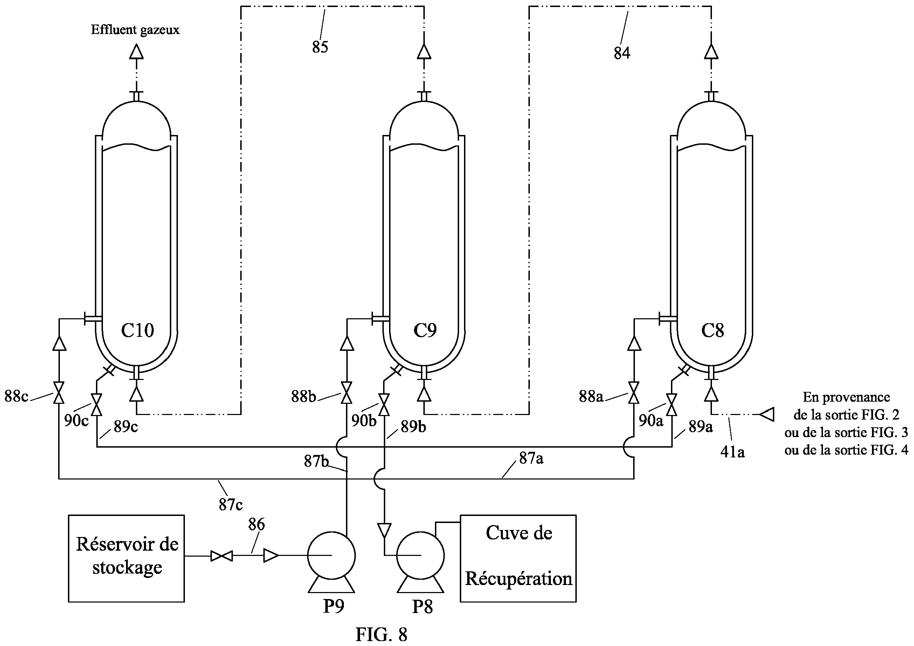

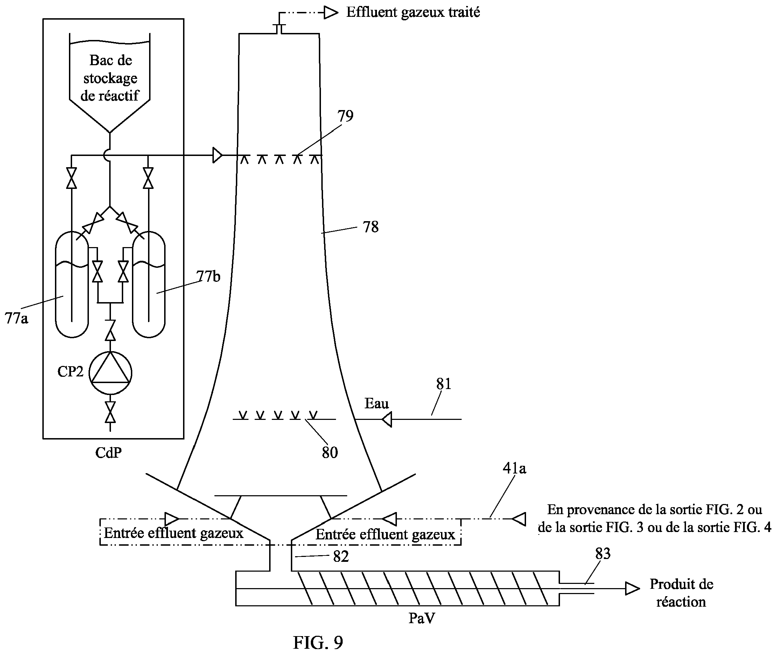

L'effluent gazeux sec à température T13 est ensuite refoulé par la conduite 41a dans le module de désulfuration de la Figure 5, ou dans le module d'épuration de la Figure 8 ou dans le module d'épuration de la Figure 9.

Le choix du module suivant dépend du rendement de traitement voulu, qui lui-même dépend étroitement de la qualité du traitement projetée, comme on pourra le voir ci-après.

Dans l'exemple illustré, on a opéré avec une température T12 de ∼-8°C et une température T13 de ∼7°C.

### MODULE DE DESULFURATION PAR PHYSISORPTION - Figure 5

Ce module est principalement conçu pour éliminer H₂S. Quelques composés comme CO₂ et NH₃ sont automatiquement ou partiellement éliminés par l'effet de physisorption. Les sulfures organiques, tels que des sulfures de carbone, peuvent se déposer et être ensuite éliminés.

### Appareillage

Ce module comporte deux groupes de trois colonnes de désulfuration chacun, à savoir C2, C3 et C4 et C5, C6 et C7, ainsi qu'un ballon de préparation d'eau BP, et un groupe à eau glacée 2.

L'eau glacée à température T15 est acheminée par une conduite 42 à une branche 43 qui se ramifie en trois branches 44 et une branche 45.

Chaque branche 44 donne dans une branche inférieure 46 qui alimente, par ses deux extrémités, les colonnes C2 et C5, C3 et C6, C4 et C7 en eau glacée. De part et d'autre du point de liaison des branches 44 et 46, se trouvent des vannes 47.

La branche 45 conduit à la base du ballon de préparation BP.

L'eau glacée à la température T15 sort de chacun des serpentins des colonnes de désulfuration C2 à C7 et du ballon BP à une température T16 dans des branches 48 (montrées avec des flèches indiquant le parcours de l'eau de refroidissement) qui relient respectivement les colonnes C2 et C5, C3 et C6, C4 et C7 qui comportent chacune deux soupapes 49 associées à chacune de ces colonnes. Entre deux soupapes 49 se trouve le point de liaison avec une branche 50 qui est reliée à une branche 51, laquelle est reliée à une branche 52 de retour au Groupe eau glacée 2. La sortie 53 du ballon de préparation BP est également reliée à la branche 51.

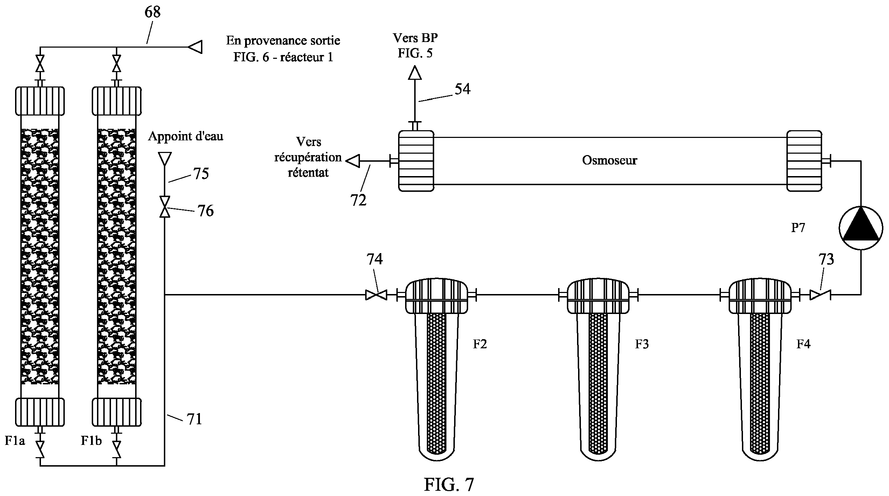

Le ballon BP récupère l'eau traitée provenant du module de traitement des eaux chargées (Figure 7) à travers la sortie 54, module qui sera décrit plus en détail ci-après. Une vanne 55 commande l'entrée de l'eau traitée dans la colonne BP.

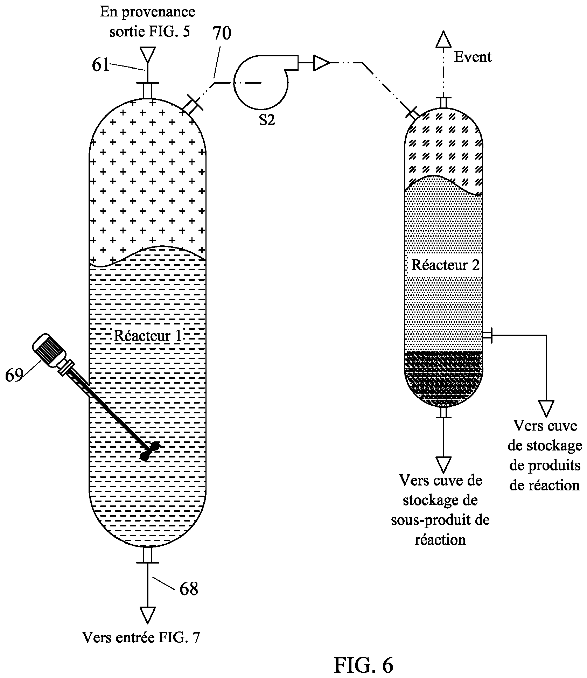

L'eau prérefroidie sortant du fond de la colonne BP est refoulée par la pompe P10 à travers une conduite 56 pour être adressée à la partie supérieure de chacune des colonnes C2 à C7, le raccordement entre les colonnes C2 à C7 et la conduite 56 étant assuré par les dérivations 57 sur lesquelles se trouvent des vannes 58. L'eau saturée est soutirée à la base de chaque colonne C2 à C7 par une conduite 59 sur laquelle se trouve une vanne 60. Les conduites 59 sont reliées à une conduite générale 61 qui dirige l'eau saturée pour la refouler vers le module de la Figure 6, réacteur 1, lequel sera décrit plus en détail ci-après.

L'effluent gazeux sec en provenance de la sortie 41a du module de la Figure 4 à la température T13 est acheminé au moyen d'une conduite 62 vers la base des colonnes C2 et C5, une vanne 63 étant associée à chacune de ces colonnes C2 et C5. L'effluent gazeux sort en partie haute dans une conduite 64 reliée à chacune des colonnes C2 et C5 avec un clapet anti-retour 65 associé à chacune de ces colonnes, puis est adressé par une conduite 66 à la conduite 62 reliant la base des deux colonnes suivantes C3 et C6, et ainsi de suite jusqu'à la sortie du gaz épuré à la sortie 67 à température T17.

### Fonctionnement

L'effluent gazeux sec en provenance du module d'élimination des COVNM (Figure 3) ou d'élimination avec séchage des composés halogénés (Figure 4) est amené à la température T13 à la série de trois colonnes successives de désulfuration C2, C3 et C4.

Dans un premier temps, l'effluent gazeux sec entre à la partie basse de la colonne de désulfuration C2 dans laquelle la température est maintenue à la température T16. La régulation de la température est assurée au moyen d'un « Groupe eau glacée 2 » qui maintient l'eau dans le système à une température T15. La circulation de l'eau glycolée glacée dans les serpentins qui sont placés à l'intérieur des colonnes de désulfuration C2 à C7 permet de maintenir une température appropriée de 2°C de préférence, la température n'excédant jamais 5°C.

L'effluent gazeux sec est diffusé dans la première colonne de désulfuration C2 dans de l'eau à la température T16. Par un phénomène de physisorption, 1 L d'eau peut absorber jusqu'à 4 L de H₂S à une température comprise entre 2 et 5°C. Pour cette raison, le système de refroidissement alimenté par le « Groupe eau glacée 2 » doit être précisément et rigoureusement régulé.

Connaissant la composition en soufre à l'entrée de l'installation du module de désulfuration grâce à la présence d'un détecteur de soufre et la quantité de H₂S pouvant être absorbé par volume d'eau, il est possible d'estimer la durée nécessaire de traitement de l'effluent gazeux selon le volume d'eau contenu dans chaque colonne de désulfuration.

Lorsque le détecteur de soufre à la sortie de la dernière colonne de désulfuration au niveau de la conduite 67 indique la présence de soufre dans l'effluent gazeux sortant de la série de colonnes de désulfuration, ceci indique que les colonnes de désulfuration C2, C3 et C4 sont saturées. Alors, l'effluent gazeux sec est adressé à la seconde série de trois colonnes de désulfuration C5, C6 et C7. Les conduites d'alimentation 62 menant à l'entrée des colonnes de désulfuration C2 à C7 sont munies de vannes 63 qui permettent de diriger l'entrée d'effluent gazeux sec dans le circuit approprié.

Parallèlement, un circuit de solution de désulfuration, laquelle est essentiellement constituée d'eau, permet d'alimenter les colonnes de désulfuration C2 à C7 et de renouveler leur contenu à chaque fois que la solution de désulfuration arrive à saturation. Un ballon de préparation BP contenant la solution de désulfuration est maintenu à la température T16. L'eau est acheminée au moyen de la pompe P10 vers les colonnes de désulfuration C2 à C7 au niveau de leur partie supérieure et est dirigée en sortie vers le module de traitement des eaux de la Figure 6 - réacteur 1 par la conduite 61 qui sort de leur partie inférieure. Le remplissage des colonnes de désulfuration C2, C3 et C4 se fait en alternance avec celui des colonnes de désulfuration C5, C6 et C7.

L'élimination des composés soufrés au niveau de la première colonne de désulfuration C2 (ou C5) est généralement de 36-38% en volume, elle est généralement de 32-35% en volume au niveau de la deuxième colonne de désulfuration C3 (ou C6) puis généralement de 30-32% en volume au niveau de la troisième colonne C4 (ou C7).

Ce module peut être adopté en vue de l'élimination du H₂S moyennant 4 NL de H₂S/ 1 l d'eau.

Au passage, on peut indiquer que, de la même façon, ce module peut être adopté pour éliminer du NH₃ à raison de 1000 NL de NH₃/ 1 l d'eau, du SO₂ moyennant 63 NL de SO₂/ 1 l d'eau et du CO₂ à raison de 1,4 NL de CO₂ / 1 l d'eau à condition que la température de l'eau de traitement soit maintenue entre 2-5°C.

En fait, si l'on souhaite éliminer H₂S, on éliminera en même temps au moins partiellement NH₃ et CO₂.

Si l'on revient à l'élimination de H₂S, dans les colonnes de désulfuration, l'eau saturée en polluants séparés de l'effluent gazeux sera à son tour adressée au module de la Figure 6 (Réacteur 1).

Dans l'exemple illustré, on a opéré avec les températures suivantes :

| | |
|---|---|
| T15 | -5°C |
| T16 | 2°C |
| T13 | ∼7°C |
| T17 | ∼4°C |

### MODULE DE SEPARATION LIQUIDE - GAZ - Figure 6 (Réacteur 1) ET DE VALORISATION DE H₂S (AVEC CO₂) PAR ABSORPTION CHIMIQUE DE H₂S EN H₂SO₄ - Figure 6 (Réacteur 2)

### Appareillage

Il comprend un réacteur 1 de dégazage qui est alimenté en partie haute par la sortie 61 du module de désulfuration de la Figure 5 (eaux de procédé saturées en polluants gazeux) et duquel sort un conduit 68 des eaux chargées allant à l'entrée du module de traitement des eaux de la Figure 7 qui sera décrit plus en détail ci-après.

Le réacteur 1 est équipé d'un agitateur mécanique avec moteur 69 ayant pour mission la séparation physique entre les deux phases aqueuse et gazeuse de l'eau de désulfuration saturée.

La phase gazeuse soutirée en haut du réacteur 1 sera acheminée au moyen d'une soufflante S2 à travers la conduite 70 vers le réacteur 2.

### Fonctionnement

L'eau principalement saturée en H₂S et CO₂ issue du module de désulfuration de la Figure 5 subit en premier lieu un dégazage à l'intérieur du réacteur 1. Le moteur 69 génère des turbulences à l'intérieur du réacteur 1, menant à la séparation entre la phase aqueuse et la phase gazeuse de l'eau de désulfuration.

La phase aqueuse est directement refoulée de la partie inférieure du réacteur 1 en direction du module de traitement des eaux de la Figure 7 par l'intermédiaire de la conduite 68.

La phase gazeuse est refoulée au réacteur 2 qui contient de l'acide acétique où elle est transformée en H₂SO₄ selon la réaction ci-après :

CH₃COOH + 2CO₂ + H₂S → H₂SO₄ + 4C + 2H₂O

H₂SO₄ + l'eau sont envoyés à une cuve de stockage.

Le carbone, sous-produit de la réaction, est envoyé vers une cuve de stockage de sous-produit de réaction. La fraction de CO₂ n'ayant pas réagi est éliminée dans l'évent qui est rejeté dans l'atmosphère.

### MODULE DE TRAITEMENT DES EAUX CHARGEES - Figure 7

### Appareillage

Il est constitué par deux filtres à substrat (tel que du charbon actif) F1a, F1b montés en parallèle, alimentés en partie haute par la conduite 68 en provenance du module de la Figure 6 - Réacteur 1. La sortie 71 des filtres à substrat F1a, F1b est adressée à trois préfiltres ordinaires spécial osmoseur F2, F3, F4 en série, puis par l'intermédiaire d'une pompe à haute pression P7, à un osmoseur d'eau dont la sortie 54 est adressée au ballon de préparation BP du module de désulfuration de la Figure 5, et la sortie 72 est adressée à une récupération de rétentat.

Un clapet anti-retour 73 est disposé sur la sortie du préfiltre ordinaire spécial osmoseur d'eau F4 et une vanne 74, à l'entrée du préfiltre ordinaire spécial osmoseur F2. Un appoint d'eau arrive par la conduite 75 dans la conduite 71, une vanne 76 étant disposée sur cette conduite 75.

### Fonctionnement

L'eau polluée, principalement chargée en sulfures organiques, en sortie du module de la Figure 6 - Réacteur 1 entre dans la partie supérieure d'un filtre à substrat F1a ou F1b. L'un des filtres se substitue à l'autre lorsque le premier arrive à saturation. Un détecteur en sortie permet de constater si la filtration est encore effective ou s'il est nécessaire de diriger l'eau polluée vers le second filtre. Les sulfures organiques et mercaptans, composés soufrés à l'état solide non éliminés au cours de l'étape précédente qui n'élimine que le soufre à l'état gazeux sous forme de H₂S, sont en particulier capturés par ces filtres à substrat F1a ou F1b.

L'eau sort par la partie basse des filtres pour être dirigée vers trois préfiltres ordinaires F2, F3 et F4 montés en série puis vers un osmoseur à membrane d'osmose inverse pour retourner vers le ballon de préparation BP du module de désulfuration de la Figure 5.

L'appoint d'eau prévu permet d'apporter l'ajustement nécessaire en eau suite aux pertes généralement de 5 à 10 % en poids de l'eau globale lors de (la filtration et) de l'agitation à l'étape précédente, lors de la séparation liquide - gaz de la Figure 6 - Réacteur 1.

Ce module de la Figure 7 permet donc (la préparation et) la régénération des eaux du procédé.

### MODULE D'EPURATION PAR ABSORPTION CHIMIQUE - Figure 8 Appareillage

Ce module comporte trois colonnes à débordement C8, C9 et C10, un réservoir de stockage relié à une pompe doseuse P9 et une cuve de récupération reliée à une pompe d'évacuation P8.

L'effluent gazeux est amené par la conduite 41a dans la partie inférieure de la colonne à débordement C8 où il va barboter. Il ressort à la partie supérieure par la conduite 84 pour entrer à la partie inférieure de la colonne à débordement C9 dont il ressort à la partie haute par la conduite 85 pour entrer à la partie inférieure de la colonne à débordement C10.

Un réservoir de stockage est relié à une pompe doseuse P9 par l'intermédiaire de la conduite 86 qui se ramifie en trois conduites 87a, 87b et 87c munies de vannes 88a, 88b et 88c, respectivement, pour alimenter respectivement les colonnes C8 à C10.

Une cuve de collecte va récupérer le produit de réaction grâce à une pompe d'évacuation P8 qui permet la collecte du produit en provenance des colonnes C8 à C10 par l'intermédiaire des conduites 89a, 89b et 89c, respectivement, qui sont munies de vannes 90a, 90b et 90c, respectivement.

### Fonctionnement

L'effluent gazeux sec en provenance du module de la Figure 2 ou du module de traitement des COVNM de la Figure 3 ou du module de traitement des composés halogénés avec séchage du gaz de la Figure 4 est refoulé à la partie inférieure de la colonne C8 remplie de CH₃COOH qui provient du réservoir de stockage.

La réaction suivante a lieu, la réaction étant similaire à celle qui a lieu dans le réacteur 2 du module de la Figure 6 :

H₂S + 2CO₂ + CH₃COOH → H₂SO₄ + 4C + 2H₂O

Dans ce cas, les colonnes à débordement sont remplies de CH₃COOH en provenance du « réservoir de stockage » et le carbone et l'acide sulfurique sont récupérés dans la « cuve de récupération ».

Il est possible également de viser l'élimination des NOₓ, tels que NO₂ + NO, selon la réaction suivante :

NO₂ + NO + 2H₂O₂ → 2HNO₃ + H₂O

Dans ce cas, les colonnes à débordement sont remplies de H₂O₂ en provenance du « réservoir de stockage » et la solution de HNO₃ est récupérée dans la « cuve de récupération ».

La même réaction se déroule dans chacune des colonnes à débordement C8, C9 et C10, dans lesquelles la proportion de polluant diminue progressivement par rapport à la colonne précédente.

L'élimination du polluant visé par le traitement au niveau de la première colonne C8 est généralement de 36-38% en volume, elle est généralement de 32-36% en volume au niveau de la deuxième colonne C9 puis de 30-32% en volume au niveau de la troisième colonne C10.

Le choix du procédé à utiliser dépend de la composition du gaz à traiter. S'il y a une petite concentration de polluant (CO₂ et H₂S), il n'est pas forcément nécessaire de passer par les modules des Figures 5, 6 et 7, mais il est préférable de passer plutôt directement à l'épuration par l'intermédiaire du présent module de la Figure 8.

On a opéré avec une température T11 de -10°C et une température T13 de +7°C.

### MODULE D'EPURATION POUVANT ÊTRE INTEGRALE -Figure 9

### Appareillage

Il est constitué par :
- une centrale de pulvérisation CdP comportant un compresseur CP2, deux colonnes 77a/77b et un bac de stockage de réactif, un réacteur 78 dans lequel se trouve, en partie haute, une rampe 79 de pulvérisation du réactif et, en partie basse, une rampe 80 de projection d'eau arrivant par la conduite 81 ; et
- une pompe à vis PaV dont l'entrée 82 est reliée à la base du réacteur 78 et à la sortie 83 de laquelle sort le produit de réaction.

### Fonctionnement

L'effluent gazeux sec en provenance du module de la Figure 2 ou de traitement des COVNM de la Figure 3 ou du module de traitement des composés halogénés avec séchage de la Figure 4 est amené par la conduite 41a à la partie basse du réacteur 78.

Un système de bullage au moyen d'un diffuseur est présent à la partie inférieure du réacteur 78.

L'effluent gazeux sec peut être si nécessaire (voir réactions ci-après) d'abord humidifié comme illustré sur la Figure 9 (ou recevoir une solution d'eau oxygénée à la place de l'eau d'humidification) au moyen de la vaporisation d'eau par l'intermédiaire de la rampe 80 de projection d'eau arrivant par la conduite 81.

A ce niveau a lieu une modification chimique de quelques composés polluants : CO₂ en présence d'eau va donner H₂CO₃ et SO₂ en présence d'eau va générer H₂SO₃.

L'effluent gazeux humidifié est ensuite exposé au réactif qui est pulvérisé par l'intermédiaire de la rampe 79 de projection de réactif.

Le réactif est stocké dans un bac de stockage au niveau de la centrale de pulvérisation CdP. Ce réactif est formulé en fonction du polluant à éliminer.

Le réactif sous forme de poudre va être mis sous pression dans des colonnes 77a et 77b pour faciliter sa pulvérisation. Le produit résultant est pulvérisé au niveau de la rampe 79 de projection de réactif.

Dans le réacteur 78, les réactions suivantes peuvent avoir lieu :
(1) Pour éliminer le H₂S, deux formulations de réactif de traitement sont possibles :
   - Cu(OH)₂ + H₂S → CuS + 2 H₂O (ce type de réactif sera utilisé dans le cas où l'effluent gazeux à traiter ne contient pas de CO₂) ; ou
   - si l'effluent gazeux contient du CO₂, on utilise le réactif Ca(OH)₂. Le traitement sera établi selon la réaction suivante :

      H₂S + Ca(OH)₂ + 2CO₂ → CaSO₄ + 2C + 2H₂0

      (un catalyseur de type CaO peut être ajouté à la composition du réactif).
(2) Pour éliminer le CO₂, on utilise le réactif Ca(OH)₂. La réaction se déroule comme suit :

   CO₂ + H₂O → H₂CO₃ ; H₂CO₃ + Ca(OH)₂ → CaCO₃ + 2H₂O
(3) Pour éliminer le SO₂, le traitement est établi selon les réactions suivantes :

   SO₂ + H₂O → H₂SO₃

   2H₂SO₃ + 2Ca(OH)₂ + CO₂ → 2CaSO₄ + C + 4H₂O (en présence de CO₂)

   H₂SO₃ + Ca(OH)₂ → CaSO₃ + 2H₂O (en l'absence de CO₂)

   La réaction peut toujours être poussée ou catalysée par CaO, un autre réactif ou par réajustement du pH.
(4) Pour éliminer les NOₓ, on utilise les réactifs H₂O₂ et Ca(OH)₂. La réaction se déroule comme suit :

   NO₂ + NO + 2H₂O₂ → 2HNO₃ + H₂O

   2HNO₃ + Ca(OH)₂ → Ca(NO₃)₂ + 2H₂O
L'ajout du H₂O₂ se fait au même niveau que celui de la pulvérisation d'eau (humidification de l'effluent gazeux).

Le produit de réaction sera éliminé à la partie basse du réacteur 78 et passera à travers une pompe à vis PaV.

Il est par ailleurs possible d'effectuer les réactions séparément, de façon étagée, et éliminer dans un premier temps uniquement H₂S, puis CO₂, etc.. Ceci dépend du produit de réaction que l'on veut récupérer et valoriser. L'installation et le choix du réactif dépendra de la demande de l'utilisateur et de la composition de l'effluent gazeux brut.

L'effluent gazeux traité sera récupéré à la partie supérieure du réacteur 78. La qualité de l'effluent gazeux traité dépend étroitement du rendement de la réaction réalisée.

Il est nécessaire de noter que les réactions mentionnées en (1) à (4) peuvent être effectuées au moyen des techniques de pulvérisation (liquide sous pression), brumisation (mélange liquide/gaz [air] sous pression) ou bullage (dispersion gazeuse dans un liquide d'absorption).

### BILAN -Figure 10

La Figure 10 représente un organigramme qui permet de visualiser plus aisément l'enchaînement des modules de traitement selon les besoins de l'utilisateur.

Le choix du procédé et plus particulièrement du module de désulfuration à utiliser parmi le module de la Figure 5, le module d'épuration de la Figure 8 et le module d'épuration de la Figure 9 s'effectue en fonction : de la concentration en polluants contenus dans l'effluent gazeux à traiter, le débit du gaz brut à traiter et la qualité recherchée de l'effluent gazeux épuré.

L'intégralité des composés polluants (principalement H₂S et COVNM) peut être éliminée par le procédé de l'invention.

Si l'on considère le gaz de synthèse, dont la concentration en goudrons, le procédé de l'invention permet en outre d'éliminer ces goudrons par l'intermédiaire du module de la Figure 1.

## Revendications

1. Procédé d'épuration d'un effluent gazeux contenant des polluants choisis parmi les goudrons, les composés organiques volatils non méthaniques (COVNM), les composés halogénés, l'hydrogène sulfuré (H₂S), l'ammoniac (NH₃), le dioxyde de soufre (SO₂), les oxydes d'azote (NOₓ) et le dioxyde de carbone (CO₂), **caractérisé par le fait que** l'on analyse l'effluent gazeux à épurer pour identifier les polluants qu'il contient, puis que l'on conduit les opérations successives suivantes selon les polluants identifiés :
(1) élimination au moins partielle, avantageusement complète, des goudrons par refroidissement de l'effluent gazeux brut pour faire passer les goudrons de leur état gazeux à leur état liquide et séparation physique de ceux-ci pour récupérer un effluent gazeux traité ;
(2) élimination au moins partielle, avantageusement complète, des COVNM par barbotage de l'effluent gazeux dans un mélange liquide de COVNM de la même composition que celle des COVNM présents dans l'effluent gazeux à traiter afin que les COVNM gazeux se condensent et rejoignent ledit mélange liquide, et récupération de l'effluent gazeux traité;
(3) élimination au moins partielle, avantageusement complète, des composés halogénés par barbotage de l'effluent gazeux dans une solution de salification, la salification permettant un séchage simultané de l'effluent gazeux, et récupération de l'effluent gazeux traité ;
(4) élimination au moins partielle d'au moins l'un parmi H₂S, NH₃, SO₂, CO₂ et NOₓ en choisissant parmi:
(4a) élimination au moins partielle d'au moins l'un parmi H₂S, NH₃, SO₂ et CO₂ par passage de l'effluent gazeux dans de l'eau réfrigérée dans laquelle lesdits H₂S, NH₃, SO₂ et CO₂ qui sont à l'état gazeux sont piégés dans cet état par physisorption, l'eau de procédé qui est saturée en lesdits polluants gazeux étant séparée pour obtenir un effluent gazeux traité; ou
(4b) élimination au moins partielle de H₂S dans le cas où du CO₂ est co-présent avec lui, par barbotage de l'effluent gazeux dans un liquide permettant l'absorption chimique du H₂S avec élimination simultanée d'au moins une partie du CO₂, ou élimination au moins partielle des NOₓ par barbotage de l'effluent gazeux dans un liquide permettant l'absorption chimique de ceux-ci, et récupération de l'effluent chimique traité; ou
(4c) élimination dans n'importe quel ordre de :
- H₂S seul ou avec CO₂ par pulvérisation dans un courant de l'effluent gazeux d'un réactif apte à se combiner avec respectivement H₂S ou H₂S + CO₂ pour donner un produit de réaction solide que l'on élimine de l'effluent gazeux pour récupérer celui-ci à l'état épuré ;
- SO₂ seul ou CO₂ seul ou SO₂ + CO₂ par humidification de l'effluent gazeux, puis pulvérisation dans l'effluent gazeux humidifié d'un réactif apte à se combiner avec le produit de réaction entre l'eau d'humidification et respectivement SO₂ ou CO₂ ou SO₂ + CO₂ pour donner un produit final de réaction que l'on élimine de l'effluent gazeux pour récupérer celui-ci à l'état épuré ; et
- NOₓ seuls par réaction de l'effluent gazeux avec H₂O₂ puis pulvérisation dans l'effluent gazeux ainsi traité d'un réactif apte à se combiner avec le produit de réaction entre H₂O₂ et les NOₓ pour donner un produit final de réaction que l'on élimine de l'effluent gazeux pour récupérer celui-ci à l'état épuré.

2. Procédé selon la revendication 1, **caractérisé par le fait que** le gaz à traiter est choisi parmi le gaz naturel, les gaz associés à l'extraction du pétrole, le biogaz, les gaz de synthèse et les rejets gazeux industriels.

3. Procédé selon l'une des revendications 1 et 2, **caractérisé par le fait qu'**en (1), on fait passer l'effluent gazeux à dégoudronner dans au moins un échangeur de chaleur à faisceau tubulaire vertical, raccordé, à sa base, à un collecteur de goudrons, ledit effluent gazeux passant en dehors des tubules et un fluide de refroidissement passant à l'intérieur des tubules, les goudrons se liquéfiant le long des tubules pour couler gravitairement et être recueillis dans le collecteur.

4. Procédé selon la revendication 3, **caractérisé par le fait que** l'on utilise deux échangeurs de chaleur à faisceau tubulaire (E2, E2'), raccordés, à leur base, à un collecteur de goudrons et un troisième échangeur de chaleur (E1) du même type mais sans collecteur de goudrons et on fait passer l'effluent gazeux par les deux séquences successives suivantes :
- dans la première séquence, on fait passer l'effluent gazeux à une température T1 supérieure à 120°C dans un premier échangeur avec collecteur (E2') sans lui faire subir d'échange thermique, ensuite dans l'échangeur sans collecteur (E1) où il subit un échange thermique pour le refroidir jusqu'à la température T2 de 120°C ± 2°C, puis dans l'autre échangeur avec collecteur (E2) pour le refroidir jusqu'à une température T3 de 25°C, les goudrons étant retenus dans les parois dudit échangeur (E2) à l'extérieur de ses tubules, le gaz dégoudronné sortant dudit échangeur E2' ; et
- dans la deuxième séquence, on fait passer l'effluent gazeux qui continue à arriver à la température T1 non plus dans l'échangeur E2' mais dans l'échangeur E2 sans lui faire subir d'échange thermique, provoquant la fluidification des goudrons retenus dans celui-ci, lesquels s'écoulent alors et peuvent être recueillis dans le collecteur (6) associé, ensuite dans l'échangeur sans collecteur (E1) où il subit un échange thermique pour le refroidir jusqu'à une température T2 de 120°C + 2°C, puis dans l'autre échangeur avec collecteur (E2') pour le refroidir jusqu'à une température T3 de 25°C, les goudrons étant retenus dans les parois dudit échangeur E2' à l'extérieur de ses tubules, le gaz dégoudronné sortant dudit échangeur E2' ;
puis que l'on répète le cycle E2'-E1-E2 puis E2-E1-E2' tant qu'il arrive de l'effluent gazeux.

5. Procédé selon l'une des revendications 1 à 4, **caractérisé par le fait qu'**en (2), on fait passer l'effluent gazeux à traiter dans une colonne à débordement (C1) avec serpentin de refroidissement, contenant ledit mélange liquide, maintenue à une température de -10°C ± 2°C, le barbotage dans ladite colonne C1 permettant d'éliminer les COVNM de l'effluent gazeux à traiter par le phénomène de condensation.

6. Procédé selon l'une des revendications 1 à 5, **caractérisé par le fait qu'**en (3), on fait barboter l'effluent gazeux à traiter dans une colonne à débordement (CH) remplie d'une solution d'acide sulfurique comme solution de salification, le barbotage dans ladite solution permettant d'éliminer les composés halogénés présents dans ledit effluent gazeux en même temps que les traces d'eau s'il en existe.

7. Procédé selon l'une des revendications 1 à 6, **caractérisé par le fait qu'**en (4a), l'eau de procédé séparée, saturée en lesdits polluants gazeux et pouvant également contenir des polluants à l'état solide est adressée à un réacteur de séparation, d'une part de l'eau chargée des éventuels polluants solides et, d'autre part , du gaz, l'eau, si elle est chargée de polluants solides, étant alors filtrée pour éliminer ces polluants et avantageusement recyclée à l'étage (4a).

8. Procédé selon l'une des revendications 1 à 6, **caractérisé par le fait qu'**en (4a), pour l'élimination de H₂S, on fait passer l'effluent gazeux à traiter dans des colonnes de désulfuration (C2 à C7) remplies d'eau réfrigérée se trouvant à une température comprise entre 2°C et 5°C, constituant un étage de désulfuration, ladite eau, par un phénomène de physisorption absorbant H₂S selon le rapport 1 L d'eau pour 4 L de H₂S, l'eau de procédé chargée en polluants gazeux et éventuellement en sulfures organiques solides étant adressée à un réacteur de séparation eau/gaz, puis l'eau séparée lors de ce dégazage, si elle est chargée en sulfures organiques, étant traitée par filtration et réinjectée en tant qu'eau traitée dans l'étage de désulfuration, les colonnes de désulfuration étant avantageusement disposées suivant deux séries montées en parallèle, chaque série comportant trois colonnes montées en série, les colonnes des deux séries (C2-C3-C4) étant tour à tour en service de désulfuration et en service de régénération de l'eau de procédé.

9. Procédé selon la revendication 8, **caractérisé par le fait que** le gaz séparé au niveau du réacteur de séparation liquide/gaz contenant du H₂S et du CO₂ est adressé dans un réacteur renfermant une solution d'acide, tel que l'acide acétique, pour transformation du H₂S et d'au moins une partie du CO₂ présent dans le gaz, le carbone et la solution d'acide sulfurique obtenus étant envoyés dans des cuves de stockage et l'éventuelle fraction de CO₂ n'ayant pas réagi étant rejetée dans l'atmosphère.

10. Procédé selon l'une des revendications 7 à 9, **caractérisé par le fait qu'**à l'étape de filtration, on fait passer le liquide séparé dans un ou plusieurs filtres (F1a, F1b) à substrat tel que charbon actif, les différents filtres étant avantageusement montés en parallèle pour un fonctionnement en alternance dans le cas où l'un deux est saturé, pour capter les polluants à l'état solide, puis dans au moins un filtre F2, F3, F4 en série pour éliminer les impuretés fines restantes, et ensuite dans un osmoseur à eau pour obtenir une eau de qualité avantageusement réinjectée à l'étage de désulfuration.

11. Procédé selon l'une des revendications 1 à 10, **caractérisé par le fait qu'**en (4b), on fait barboter l'effluent à purifier dans une série de colonnes à débordement à la température ambiante, les colonnes à débordement (C8, C9 et C10) renfermant une solution d'acide, tel que l'acide acétique, pour transformation du H₂S et du CO₂ présent dans le gaz, le carbone et la solution d'acide sulfurique obtenus étant envoyés dans des cuves de récupération, et l'effluent gazeux au moins partiellement désulfuré étant récupéré à la sortie de la dernière colonne.

12. Procédé selon l'une des revendications 1 à 10, **caractérisé par le fait qu'**en (4b), on fait barboter l'effluent à purifier dans une série de colonnes à débordement à la température ambiante, les colonnes à débordement (C8, C9 et C10) renfermant une solution d'eau oxygénée pour transformation des NOₓ présents dans le gaz, le HNO₃ obtenu étant envoyé dans une cuve de récupération, et l'effluent gazeux au moins partiellement débarrassé des NOₓ étant récupéré à la sortie de la dernière colonne.

13. Procédé selon l'une des revendications 1 à 12, **caractérisé par le fait qu'**en (4c), on diffuse l'effluent gazeux suivant un courant ascendant dans un réacteur comportant, dans sa partie inférieure, un dispositif, tel qu'une rampe, d'apport d'eau ou de solution de H₂O₂ lorsqu'une humidification ou une réaction avec H₂O₂ respectivement est prévue, dans sa partie supérieure, un dispositif, tel qu'une rampe, de pulvérisation de réactif, et, en partie basse, un dispositif de récupération des produits finals de réaction, les réactifs appliqués étant notamment Cu(OH)₂ dans le cas de l'élimination de H₂S seul ; Ca(OH)₂ dans le cas de l'élimination de H₂S + CO₂ ; de Ca(OH)₂ dans le cas de l'élimination de CO₂ seul par réaction de H₂CO₃ résultant de la réaction CO₂ + H₂O avec Ca(OH)₂ ; de Ca(OH)₂ dans le cas de l'élimination de SO₂ seul ou de SO₂ + CO₂ par humidification suivi par un traitement par Ca(OH)₂ ; de Ca(OH)₂ dans le cas de l'élimination des NOₓ seuls par réaction avec H₂O₂ puis par absorption chimique du HNO₃ sur Ca(OH)₂.

## Patentansprüche

1. Reinigungsverfahren für ein Abgas, das Schadstoffe aus der folgenden Gruppe enthält: Teere, flüchtige organische Verbindungen ohne Methan (NMVOCs), Halogenverbindungen, Schwefelwasserstoff (H₂S), Ammoniak (NH₃), Schwefeldioxid (SO₂), Stickstoffoxide (NOx) und Kohlendioxid (CO₂), **gekennzeichnet dadurch, dass** man das zu reinigende Abgas analysiert, um die Schadstoffe zu identifizieren, die es enthält, und dann die folgenden Operationen je nach den identifizierten Schadstoffen durchführt:
(1) Elimination mindestens teilweise, vorteilhafterweise vollständig, der Teere durch Abkühlung von Rohabgas, um die Teere aus dem gasförmigen in den flüssigen Zustand übergehen zu lassen, und ihre physische Trennung, um ein behandeltes Abgas wiederzuerlangen;
(2) Elimination mindestens teilweise, vorteilhafterweise vollständig, der NMVOCs durch Einblasen des Abgases in eine flüssige Mischung von NMVOCs mit derselben Zusammensetzung wie die der in dem zu behandelnden Abgas vorhandenen NMVOCs, damit die gasförmigen NMVOCs kondensieren und zu der besagten flüssigen Mischung hinzukommen, und Rückgewinnung des behandelten Abgases;
(3) Elimination mindestens teilweise, vorteilhafterweise vollständig, der Halogenverbindungen durch Einblasen von Abgas in eine Salzbildungslösung, die eine gleichzeitige Trocknung des Abgases ermöglicht, und Rückgewinnung des behandelten Abgases;
(4) Elimination, mindestens teilweise, mindestens eines der folgenden H₂S, NH₃, SO₂, CO₂ und NOₓ, auf eine der folgenden Arten:
(4a) Elimination, mindestens teilweise, mindestens eines der folgenden: H₂S, NH₃, SO₂ und CO₂, durch Durchlauf von Abgas in gekühltem Wasser, in dem besagte H₂S, NH₃, SO₂ und CO₂, die im gasförmigen Zustand sind, durch Physisorption in diesem Zustand festgehalten werden, wobei das Prozesswasser, das mit den gasförmigen Schadstoffen gesättigt ist, getrennt wird, um ein behandeltes Abgas zu erhalten; oder
(4b) Elimination, mindestens teilweise, von H₂S falls CO₂ mit ihm zusammen vorhanden ist, durch Einblasen von Abgas in eine Flüssigkeit, wodurch die chemische Absorption des H₂S mit gleichzeitiger Elimination mindestens eines Teils des CO₂ möglich wird, oder Elimination, mindestens teilweise, der NOₓ durch Einblasen des Abgases in eine Flüssigkeit, wodurch die chemische Absorption von diesen möglich wird, und Rückgewinnung des behandelten chemischen Ausflusses; oder
(4c) Elimination in beliebiger Reihenfolge von:
- H₂S allein oder mit CO₂ durch Pulverisierung in einem Strom des Abgases eines Reagens, das fähig ist, sich mit H₂S oder H₂S + CO₂ zu verbinden, um ein solides Reaktionsprodukt zu ergeben, das man aus dem Abgas beseitigt, um dies in gereinigtem Zustand zurückzugewinnen;
- SO₂ allein oder CO₂ allein oder SO₂ + CO₂ durch Anfeuchtung des Abgases, dann Pulverisierung, in dem angefeuchteten Abgas, eines Reagens, das fähig ist, sich mit dem Reaktionsprodukt zwischen dem Befeuchtungswasser und SO₂ oder CO₂ oder SO₂ + CO₂ zu verbinden, um ein Reaktionsendprodukt zu ergeben, das man aus dem Abgas eliminiert, um dieses im gereinigten Zustand zurückzugewinnen; und
- NOₓ allein durch Reaktion von Abgas mit H₂O₂, dann Pulverisierung in dem so behandelten Abgas eines Reagens, das fähig ist, sich mit dem Reaktionsprodukt zwischen H₂O₂ und den NOₓ zu verbinden, um ein Reaktionsendprodukt zu ergeben, das man aus dem Abgas eliminiert, um dieses im gereinigten Zustand zurückzugewinnen.

2. Verfahren nach Anspruch 1, **gekennzeichnet dadurch, dass** das zu behandelnde Gas aus folgenden gewählt ist: Erdgas, die mit der Erdölförderung verbundenen Gase, Biogas, Synthesegase und gasförmige industrielle Abfallstoffe.

3. Verfahren nach einem der Ansprüche 1 und 2, **gekennzeichnet durch** die Tatsache, dass man in (1) das Abgas einer Teerentfernung in mindestens einem Wärmetauscher mit vertikalem Rohrbündel unterzieht, der an seiner Basis mit einem Teersammler verbunden ist, wobei besagtes Abgas außerhalb der Tubuli strömt und eine Kühlflüssigkeit innerhalb der Tubuli strömt, wobei der Teer sich entlang der Tubuli verflüssigt, um schwerkraftbedingt zu fließen und in dem Sammler gesammelt zu werden.

4. Verfahren nach Anspruch 3, **gekennzeichnet dadurch, dass** man zwei Wärmetauscher mit Rohrbündel (E2, E2') benutzt, die an ihrer Basis mit einem Teersammler verbunden sind, und einen dritten Wärmetauscher (E1) desselben Typs aber ohne Teersammler, und man lässt das Abgas die beiden folgenden aufeinanderfolgenden Sequenzen durchlaufen:
- in der ersten Sequenz lässt man das Abgas bei einer Temperatur T1 von über 120°C in einen ersten Tauscher mit Kollektor (E2') hinein, ohne es einem Wärmeaustausch zu unterziehen, danach in den Tauscher ohne Kollektor (E1), wo es einen Wärmeaustausch erfährt, um es auf die Temperatur T2 von 120°C ± 2°C abzukühlen, dann in den anderen Tauscher mit Kollektor (E2), um es auf eine Temperatur T3 von 25°C abzukühlen, wobei der Teer in den Wänden des genannten Tauschers (E2) an der Außenseite seiner Tubuli zurückgehalten wird, das entteerte Gas tritt aus dem genannten Tauscher E2' aus; und
- in der zweiten Sequenz lässt man das Abgas, das weiterhin die Temperatur T1 erreicht, nicht mehr in den Tauscher E2', sondern in den Tauscher E2, ohne es einem Wärmeaustausch zu unterziehen, was zur Verflüssigung der darin zurückgehaltenen Teere führt, die dann ablaufen und in dem angeschlossenen Kollektor (6) gesammelt werden können, danach in den Tauscher ohne Kollektor (E1), wo es einen Wärmeaustausch erfährt, um es auf die Temperatur T2 von 120°C ± 2°C abzukühlen, dann in den anderen Tauscher mit Kollektor (E2'), um es auf eine Temperatur T3 von 25°C abzukühlen, wobei der Teer in den Wänden des genannten Tauschers E2' an der Außenseite seiner Tubuli zurückgehalten wird, das entteerte Gas tritt aus dem genannten Tauscher E2' aus;
dann wiederholt man den Zyklus E2'-E1-E2 und danach E2-E1-E2', so lange Abgas ankommt.

5. Verfahren nach einem der Ansprüche 1 bis 4, **gekennzeichnet durch** die Tatsache, dass man in (2) das zu behandelnde Abgas eine Überlaufsäule (C1) mit Kühlschlange durchlaufen lässt, die besagte flüssige Mischung enthält, die auf einer Temperatur von -10°C ± 2°C gehalten wird, das Einblasen in besagte Säule TC1 ermöglicht es, die NMVOCs des zu behandelndem Abgases durch das Phänomen der Kondensation zu eliminieren.

6. Verfahren nach einem der Ansprüche 1 bis 5, **gekennzeichnet durch** die Tatsache, dass man in (3) das zu behandelnde Abgas in eine Überlaufsäule (CH) einblasen lässt, die mit einer Schwefelsäurelösung als Salzbildungslösung gefüllt ist, wobei das Einblasen in besagte Lösung es ermöglicht, die in besagtem Abgas vorhandenen Halogenverbindungen wie auch Wasserspuren zu entfernen, falls solche vorhanden sind.

7. Verfahren nach einem der Ansprüche 1 bis 6, **gekennzeichnet durch** die Tatsache, dass in (4a) das getrennte Prozesswasser, das mit den gasförmigen Schadstoffen gesättigt ist und ebenfalls Schadstoffe in festem Zustand enthalten kann, einem Trennreaktor zugeführt wird, zur Trennung einerseits des Wassers, das mit eventuellen festen Schadstoffen beladen ist, und andererseits des Gases; wenn das Wasser mit festen Schadstoffen beladen ist, wird es filtriert, um diese Schadstoffe zu eliminieren, und vorteilhafterweise auf Stufe (4a) rezykliert.

8. Verfahren nach einem der Ansprüche 1 bis 6, **gekennzeichnet dadurch, dass** man in (4a) zur Entfernung von H₂S das zu behandelnde Abgas Entschwefelungssäulen (C2 bis C7) durchlaufen lässt, die mit gekühltem Wasser gefüllt sind, das eine Temperatur zwischen 2°C und 5°C aufweist, die eine Entschwefelungsstufe darstellen, besagtes Wasser, durch ein Phänomen der Physisorption, H₂S absorbiert, in dem Verhältnis 1 l Wasser zu 4 l H₂S, das mit gasförmigen Schadstoffen und eventuell festen organischen Sulfiden beladene Prozesswasser wird einem Wasser/Gas-Trennreaktor zugeführt, dann wird das Wasser, das bei dieser Entgasung getrennt wird, wenn es mit organischen Sulfiden beladen ist, durch Filtrierung verarbeitet und als verarbeitetes Wasser wieder in die Entschwefelungsstufe eingespritzt, wobei die Entschwefelungssäulen vorteilhafterweise in zwei parallel montierten Reihen angeordnet sind, jede Reihe umfasst drei in Reihe angeordnete Säulen, die Säulen der beiden Reihen (C2-C3-C4) arbeiten abwechselnd zur Entschwefelung und zur Regeneration des Prozesswassers.

9. Verfahren nach Anspruch 8, **gekennzeichnet dadurch, dass** das getrennte Gas auf Höhe des Flüssigkeit/Gas-Trennreaktors, der H₂S und CO₂ enthält, einem Reaktor zugeführt wird, der eine Lösung von Säure enthält, wie Essigsäure, zur Umwandlung des H₂S und mindestens eines Teils des in dem Gas vorhandenen CO₂, wobei der erhaltene Kohlenstoff und die erhaltene Lösung von Schwefelsäure in Lagerbehälter geleitet werden und der eventuelle CO₂-Anteil, der nicht reagiert hat, in die Atmosphäre abgegeben wird.

10. Verfahren nach einem der Ansprüche 7 bis 9, **gekennzeichnet dadurch, dass** man in der Filtrierungsphase die getrennte Flüssigkeit durch einen oder mehrere Filter (F1a, F1b) mit Substrat wie Aktivkohle laufen lässt, die verschiedenen Filter sind vorteilhafterweise parallel montiert für einen abwechselnden Betrieb, falls der eine von ihnen gesättigt ist, um die Schadstoffe in festem Zustand zu empfangen, dann durch mindestens einen Filter F2, F3, F4 in Reihe, um die verbleibenden feinen Unreinheiten zu eliminieren, und danach durch eine Osmoseanlage mit Wasser, um Wasser von Qualität zu erhalten, das vorteilhafterweise in der Entschwefelungsstufe wieder eingespritzt wird.

11. Verfahren nach einem der Ansprüche 1 bis 10, **gekennzeichnet durch** die Tatsache, dass man in (4b) das zu reinigende Abgas in eine Reihe von Überlaufsäulen bei Umgebungstemperatur einblasen lässt, die Überlaufsäulen (C8, C9 und C10) enthalten eine Lösung von Säure, wie Essigsäure, zur Umwandlung des H₂S und des in dem Gas vorhandenen CO₂, der erhaltene Kohlenstoff und die erhaltene Lösung von Schwefelsäure werden in Sammelbehälter geleitet, und das zumindest teilweise entschwefelte Abgas wird am Ausgang der letzten Säule gesammelt.

12. Verfahren nach einem der Ansprüche 1 bis 10, **gekennzeichnet durch** die Tatsache, dass man in (4b) das zu reinigende Abgas in eine Reihe von Überlaufsäulen bei Umgebungstemperatur einblasen lässt, die Überlaufsäulen (C8, C9 und C10) enthalten eine Lösung von Wasserstoffsuperoxid zur Umwandlung der in dem Gas vorhandenen NOₓ, das erhaltene HNO₃ wird in einen Sammelbehälter geleitet, und das zumindest teilweise von NOₓ gereinigte Abgas wird am Ausgang der letzten Säule gesammelt.

13. Verfahren nach einem der Ansprüche 1 bis 12, **gekennzeichnet durch** die Tatsache, dass man in (4c) das Abgas gemäß einem Aufwind in einem Reaktor verbreitet, der in seinem Unterteil eine Vorrichtung wie eine Rampe umfasst, zum Zulauf von Wasser oder einer H₂O₂-Lösung, falls eine Anfeuchtung bzw. eine Reaktion mit H₂O₂ vorgesehen ist, und in seinem Oberteil eine Vorrichtung wie eine Rampe zur Reagenspulverisierung und im niederen Teil eine Vorrichtung zum Sammeln der Reaktionsendprodukte, die verwendeten Reagenzien sind vor allem Cu(OH)₂ bei der Entfernung von nur H₂S; Ca(OH)₂ bei der Entfernung von H₂S + CO₂; Ca(OH)₂ in dem Fall der Entfernung von nur CO₂ durch Reaktion von H₂CO₃ als Ergebnis der Reaktion CO₂ + H₂O mit Ca(OH)₂; Ca(OH)₂ in dem Fall der Entfernung von nur SO₂ oder von SO₂ + CO₂ durch Anfeuchtung, gefolgt von einer Behandlung mit Ca(OH)₂; Ca(OH)₂ in dem Fall der Entfernung der NOₓ nur durch Reaktion mit H₂O₂, dann durch chemische Absorption des HNO₃ auf Ca(OH)₂.

## Claims

1. A process for purifying a gaseous effluent containing pollutants selected among tars, non-methane volatile organic compounds (NMVOCs), halogenated compounds, hydrogen sulphide (H₂S), ammonia (NH₃), sulphur dioxide (SO₂), nitrogen oxides (NOₓ) and carbon dioxide (CO₂), **characterized by** the fact that the gaseous effluent to be purified is analyzed in order to identify the pollutants contained therein, then that the following sequential operations are carried out according to the identified pollutants:
(1) at least partially, advantageously completely, removing the tars by cooling the raw gaseous effluent in order to change the tars from their gaseous state to their liquid state, and physically separating them in order to recover a treated gaseous effluent;
(2) at least partially, advantageously completely, removing the NMVOCs by bubbling the gaseous effluent in a liquid mixture of NMVOCs having the same composition as that of the NMVOCs present in the gaseous effluent to be treated in order that the gaseous NMVOCs condense and return to said liquid mixture, and recovering the treated gaseous effluent;
(3) at least partially, advantageously completely, removing the halogenated compounds by bubbling the gaseous effluent in a salification solution, the salification allowing a simultaneous drying of the gaseous effluent, and recovering the treated gaseous effluent;
(4) at least partially removing at least one of H₂S, NH₃, SO₂, CO₂ and Noₓ by selecting among:
(4a) at least partially removing at least one of H₂S, NH₃, SO₂ and CO₂ by passing the gaseous effluent in chilled water in which said H₂S, NH₃, SO₂ and CO₂, which are in a gaseous state, are trapped in such a state by physisorption, the process water which is saturated with said gaseous pollutants being separated in order to obtain a treated gaseous effluent; or
(4b) at least partially removing H₂S when CO₂ is co-present with it, by bubbling the gaseous effluent in a liquid allowing the chemical absorption of H₂S with the simultaneous removal of at least a part of CO₂, or at least partially removing NOₓ by bubbling the gaseous effluent in a liquid allowing their chemical absorption, and recovering the treated gaseous effluent; or
(4c) removing in any order:
- H₂S alone or with CO₂ by spraying, in a stream of the gaseous effluent, a reagent able to combine with H₂S or H₂S + CO₂ respectively, in order to produce a solid reaction product which is removed from the gaseous effluent in order to recover it in a purified state;
- SO₂ alone or CO₂ alone or SO₂ + CO₂ by wetting the gaseous effluent, then by spraying, in the wet gaseous effluent, a reagent able to combine with the reaction product between the wetting water and SO₂ or CO₂ or SO₂ + CO₂ respectively in order to produce a final reaction product which is removed from the gaseous effluent in order to recover it in a purified state; and
- NOₓ alone by reacting the gaseous effluent with H₂O₂, then by spraying, in the thus treated gaseous effluent, a reagent able to combine with the reaction product between H₂O₂ and the NOₓ in order to produce a final reaction product which is removed from the gaseous effluent in order to recover it in a purified state.

2. The process according to claim 1, **characterized by** the fact that the gas to be treated is selected among natural gas, gases associated with oil extraction, biogas, synthetic gases and industrial gaseous discharges.

3. The process according to anyone of claims 1 and 2, **characterized by** the fact that in (1), the gaseous effluent to be subjected to a tar removal is passed through at least a vertical tube bundle heat exchanger, which is connected, at its base, to a tar collector, said gaseous effluent passing outside the tubes and a coolant passing inside the tubes, the tars liquefying along the tubes in order to flow by gravitation and to be collected in the collector.

4. The process according to claim 3, **characterized by** the fact that two tube bundle heat exchangers (E2, E2'), which are connected, at their base, to a tar collector, and a third heat exchanger (E1) of the same type but without tar collector, are used, and the gaseous effluent is allowed to go through both following sequential steps:
- in the first step, the gaseous effluent is allow to pass, at a temperature T1 greater than 120°C, through a first exchanger with a collector (E2') without subjecting it to a heat exchange, then through the exchanger without collector (E1) where it is subjected to a heat exchange in order to cool it to the temperature T2 of 120°C ± 2°C, then through the other exchanger with a collector (E2) in order to cool it to a temperature T3 of 25°C, the tars being retained in the walls of said exchanger (E2) outside its tubes, the gas the tars of which were removed leaving said exchanger E2'; and
- in the second step, the gaseous effluent which keeps reaching the temperature T1 is allowed to pass not through the exchanger E2' any more but through the exchanger E2 without subjecting it to a heat exchange, causing the tars retained therein to fluidify, which ones thus flow and can be collected in the associated collector (6), then through the exchanger without collector (E1) where it is subjected to a heat exchange in order to cool it to a temperature T2 of 120°C ± 2°C, then through the other exchanger with a collector (E2') in order to cool it to a temperature T3 of 25°C, the tars being retained in the walls of said exchanger E2' outside its tubes, the gas the tars of which were removed leaving said exchanger E2';
then by the fact that the cycles E2'-E1-E2 then E2-E1-E2' are repeated as long as a gaseous effluent arrives.

5. The process according to anyone of claims 1 to 4, **characterized by** the fact that in (2), the gaseous effluent to be treated is allowed to pass through an overflow column (C1) with a cooling coil, containing said liquid mixture, maintained at a temperature of -10°C ± 2°C, bubbling in said column C1 allowing to remove the NMVOCs from the gaseous effluent to be treated by the condensation phenomenon.

6. The process according to anyone of claims 1 to 5, **characterized by** the fact that in (3), the gaseous effluent to be treated is allowed to bubble in an overflow column (CH) filled with a sulfuric acid solution as the salification solution, bubbling in said solution allowing to remove the halogenated compounds present in said gaseous effluent at the same time as water traces, if any.

7. The process according to anyone of claims 1 to 6, **characterized by** the fact that in (4a), the process water, which is separated, saturated with said gaseous pollutants and which can also contain pollutants in a solid state, is sent to a separating reactor, for separating, on the one hand, the water containing the possible solid pollutants and, on the other hand, the gas, the water, if it contains solid pollutants, thus being filtered in order to remove such pollutants and advantageously recycled at the stage (4a).

8. The process according to anyone of claims 1 to 6, **characterized by** the fact that in (4a), in order to remove H₂S, the gaseous effluent to be treated is allowed to pass through desulfurization columns (C2 to C7) filled with chilled water being at a temperature between 2°C and 5°C, constituting a desulfurization stage, said water, by a physisorption phenomenon, absorbing H₂S according to the ratio of 1L of water to 4L of H₂S, the process water, which contains gaseous pollutants and possibly solid organic sulphides, being sent to a water/gas separating reactor, then the water which is separated during such a degassing, if it contains organic sulphides, being treated by filtration and reinjected as a treated water into the desulfurization stage, the desulfurization columns being advantageously arranged according to two series installed in parallel, each series including three columns installed in series, the columns of both series (C2-C3-C4) in turn being used for desulfurization and used for regenerating the process water.

9. The process according to claim 8, **characterized by** the fact that the gas separated at the liquid/gas separating reactor containing H₂S and CO₂ is sent to a reactor containing an acid solution, such as acetic acid, in order to convert H₂S and at least a part of CO₂ which is present in the gas, the carbon and the sulfuric acid solution which are obtained being sent into storage tanks and the possible CO₂ moiety which is not reacted returning to the atmosphere.

10. The process according to anyone of claims 7 to 9, **characterized by** the fact that, at the filtration step, the separated liquid is allowed to pass through one or more filters (F1a, F1b) with a substrate, such as active carbon, the different filters being advantageously installed in parallel in order to work alternately when one of them is saturated, in order to gather the pollutants in a solid state, then through at least one filter F2, F3, F4 in series in order to remove the remaining fine contaminants, and then through a water osmosis unit in order to obtain a high quality water advantageously reinjected at the desulfurization stage.

11. The process according to anyone of claims 1 to 10, **characterized by** the fact that in (4b), the gaseous effluent to be purified is allowed to bubble in a series of overflow columns at room temperature, the overflow columns (C8, C9 and C10) containing an acid solution, such as acetic acid, so as to convert H₂S and CO₂ which are present in the gas, the carbon and the sulfuric acid solution which are obtained being sent into collecting tanks, and the gaseous effluent which is at least partially desulfurized being recovered at the outlet of the last column.

12. The process according to anyone of claims 1 to 10, **characterized by** the fact that in (4b), the gaseous effluent to be purified is allowed to bubble in a series of overflow columns at room temperature, the overflow columns (C8, C9 and C10) containing an hydrogen peroxide solution for the conversion of the NOₓ which are present in the gas, HNO₃ which is obtained being sent into a collecting tank, and the gaseous effluent which is at least partially cleared of NOₓ being recovered at the outlet of the last column.

13. The process according to anyone of claims 1 to 12, **characterized by** the fact that in (4c), the gaseous effluent is diffused according to an upflow in a reactor provided, in its lower part, with a device, such as a manifold, for supplying water or a H₂O₂ solution when a wetting or a reaction with H₂O₂ respectively is contemplated, in its upper part, with a device, such as a manifold, for spraying a reagent, and, in the bottom, with a device for recovering final reaction products, the reagents which are applied especially being Cu(OH)₂ when H₂S alone is intended to be removed; Ca(OH)₂ when H₂S + CO₂ are intended to be removed; Ca(OH)₂ when CO₂ alone is intended to be removed by reacting H₂CO₃ resulting from the reaction CO₂ + H₂O with Ca(OH)₂; Ca(OH)₂ when SO₂ alone is intended to be removed or SO₂ + CO₂ are intended to be removed by wetting followed by a treatment by Ca(OH)₂; Ca(OH)₂ when the NOₓ alone are intended to be removed by reacting with H₂O₂, then by chemically absorbing HNO₃ on Ca(OH)₂.
